# EUROPEAN PATENT SPECIFICATION

(11) **EP 1 773 352 B1**
(45) Date of publication and mention of the grant of the patent: **09.10.2013**
(21) Application number: 05758938.4
(22) Date of filing: 10.07.2005
(51) Int. Cl.: C07F 9/02, A61K 31/66

(54) **IMPROVED PROCESS FOR THE PREPARATION OF OXIDIZED PHOSPHOLIPIDS**
VERBESSERTES VERFAHREN ZUR HERSTELLUNG VON OXIDIERTEN PHOSPHOLIPIDEN
PROCEDE AMELIORE DE PREPARATION DE PHOSPHOLIPIDES OXYDES

(30) Priority: 09.07.2004 US 586219 P
(43) Date of publication of application: 18.04.2007
(60) Divisional application: 12179530.6
(73) Proprietor: Vascular Biogenics Ltd., 60376 Or Yehuda (IL)
(72) Inventor: HALPERIN, Gideon, 90836 Har-Adar (IL); KOVALEVSKI-ISHAI, Eti, 42255 Netania (IL)
(74) Representative: Vossius & Partner
(86) International application number: PCT/IL2005/000735
(87) International publication number: WO 2006/006161

(56) References cited:
- WO-A2-02/41827
- WO-A2-2004/106486
- US-B2- 6 838 452

## Description

### FIELD AND BACKGROUND OF THE INVENTION

The present invention relates to the field of synthetic chemistry, and more particularly, to novel synthetic processes useful for the preparation of oxidized phospholipids as defined herein.

In the art of pharmacology, modified phospholipids are known in many applications. In U.S. Patent No. 5,985,292 compositions for trans-dermal and trans-membranal application incorporating phospholipids bearing lipid-soluble active compounds are disclosed. In U.S. Patent Nos. 6,261,597, 6,017,513 and 4,614,796 phospholipid derivatives incorporated into liposomes and biovectors for drug delivery are disclosed. In U.S. Patent No. 5,660,855 lipid constructs of aminomannose-derivatized cholesterol suitable for targeting smooth muscle cells or tissue, formulated in liposomes, are disclosed. These formulations are aimed at reducing restenosis in arteries, using PTCA procedures.

The use of liposomes for treating atherosclerosis has been further disclosed in the PCT patent application published as WO 95/23592. Therein are disclosed pharmaceutical compositions of unilamellar liposomes that may contain phospholipids. The liposomes disclosed in WO 95/23592 are aimed at optimizing cholesterol efflux from atherosclerotic plaque and are typically non-oxidized phospholipids.

Modified phospholipid derivatives mimicking platelet activation factor (PAF) structures are known to be pharmaceutically active, affecting such functions as vascular permeability, blood pressure and heart function inhibition. In U.S. Patent No. 4,778,912 it is suggested that one group of such derivatives has anti-cancer activity.

In U.S. Patent No. 4,329,302 synthetic 1-O-alkyl ether or 1-O-fatty acyl phosphoglycerides compounds which are lysolechitin derivatives usable in mediating platelet activation are disclosed. In U.S. Patent No. 4,329,302 is disclosed that small chain acylation of lysolechitin gave rise to compounds with platelet activating behavior, as opposed to long-chain acylation, and that the 1-O-alkyl ether are biologically superior to the corresponding 1-O-fatty acyl derivatives in mimicking PAF.

The structural effect of various phospholipids on the biological activity thereof has been investigated by Tokumura et al. (Journal of Pharmacology and Experimental Therapeutics. July 1981, Vol. 219, No. 1) and in U.S. Patent No. 4,827,011, with respect to hypertension.

In Swiss patent CH 642,665 modified phospholipid ether derivatives that may have some physiological effect are disclosed.

Davies et al. (J. Biol. Chem. 2001, 276:16015) teach the use of oxidized phospholipids as peroxisome proliferator-activated receptor agonists.

In U.S. Patent No. 6,838,452 and in WO 04/106486 (which are incorporated by reference as if fully set forth herein), by the present assignee, the preparation of well-defined oxidized phospholipids, as well, as other synthetic oxidized LDL (low density lipoprotein) components, is disclosed. The disclosed compounds are reported to be highly effective in treating atherosclerosis and related diseases, as well as autoimmune diseases and inflammatory disorders. It is further reported that the oxidized phospholipid regulate the immune response to oxidized LDL. It is further reported that generally, etherified oxidized phospholipids are superior to comparable esterified oxidized phospholipids as therapeutic agents.

Oxidation of phospholipids occurs *in vivo* through the action of free radicals and enzymatic reactions abundant in atheromatous plaque. *In vitro,* preparation of oxidized phospholipids usually involves simple chemical oxidation of a native LDL or LDL phospholipid component. Investigators studying the role of oxidized LDL have employed, for example, ferrous ions and ascorbic acid (Itabe, H., et al., J.Biol. Chem. 1996; 271:33208-217) and copper sulfate (George, J. et al., Atherosclerosis. 1998; 138:147-152; Ameli, S. et al., Arteriosclerosis Thromb Vasc Biol 1996; 16:1074-79) to produce oxidized, or mildly oxidized phospholipid molecules similar to those associated with plaque components. Similarly prepared molecules have been shown to be identical to auto-antigens associated with atherogenesis (Watson A.D. et al., J. Biol. Chem. 1997; 272:13597-607) and able to induce protective anti-atherogenic immune tolerance (U.S. Patent Application No. 09/806,400 to Shoenfeld et al., filed Sept 30,1999) in mice. Similarly, in U.S. Patent No. 5,561,052, a method of producing oxidized lipids and phospholipids using copper sulfate and superoxide dismutase to produce oxidized arachidonic or linoleic acids and oxidized LDL for diagnostic use is disclosed.

The oxidation techniques described above for preparing oxidized phospholipids involve reactions that are non-specific and yield a mixture of oxidized products. The non-specificity of the reactions reduces yield, requires a further separation step and raises concern for undesired side effects when the products are integrated in pharmaceutical compositions.

1-Palmitoyl-2-(5-oxovaleroyl)-*sn*-glycero-3-phosphocholine (POVPC) and derivatives thereof such as 1-palmitoyl-2-glutaroyl-*sn*-glycero-3-phosphocholine (PGPC) are representative examples of mildly oxidized esterified phospholipids that have been studied with respect to atherogenesis (see, for example, Boullier et al., J. Biol. Chem.. 2000, 275:9163; Subbanagounder et al., Circulation Research, 1999, pp. 311). The effect of different structural analogs that belong to this class of oxidized phospholipids has also been studied (see, for example, Subbanagounder et al., Arterioscler. Thromb. Nasc. Biol. 2000, pp. 2248; Leitinger et al., Proc. Nat. Ac. Sci. 1999,96:12010).

POVPC is typically prepared by providing a phosphatidyl choline bearing an unsaturated fatty acid and oxidizing the unsaturated bond of the fatty acid by, e.g., ozonolysis (oxidative cleavage) or using a periodate as an oxidizing agent. Such a synthetic pathway typically involves a multi-step synthesis and requires separation of most of the formed intermediates by means of column chromatography.

As described in U.S. Patent No. 6,838,452 cited above, etherified oxidized phospholipids have been similarly prepared by oxidizing an unsaturated bond of a fatty acid attached to a phospholipid backbone. More particularly, the etherified oxidized phospholipids were prepared, according to the teachings of this patent, by introducing an unsaturated short fatty acid to a glycerolipid, introducing a phosphate moiety to the obtained intermediate and oxidizing the unsaturated bond in the fatty acid chain by means of (i) hydrogen peroxide and formic acid, so as to obtain a diol, followed by potassium periodate, so as to obtain an aldehyde; or (ii) ozonolysis. While the oxidative cleavage of the unsaturated bond results in an aldehyde moiety, other oxidized moieties (e.g., carboxylic acid, acetal, etc.) were obtained by further oxidizing the aldehyde moiety. Such a multi-step synthetic pathway is oftentimes characterized by relatively low overall yields and again, requires separation of most of the formed intermediates by means of column chromatography.

It has been found that *in vivo* applications employing esterified oxidized phospholipids prepared as above have the disadvantage of susceptibility to recognition, binding and metabolism of the active component in the body, making dosage and stability after administration an important consideration. Etherified oxidized phospholipids, such as those described in U.S. Patent No. 6,838,452 and in WO 04/106486, exhibit higher biostability and high therapeutic activity.

Thus, the currently known methods of preparing etherified, as well as esterified, oxidized phospholipids involve complex multi-step procedures suitable for laboratory preparation yet rendering industrial scale preparation inefficient and complex. In particular, these multi-step procedures require industrially inapplicable separation techniques such as column chromatography during various stages of the synthetic process.

In view of the beneficial therapeutic activity of oxidized phospholipids in general and of etherified oxidized phospholipids in particular, there is a widely recognized need for and it would be highly advantageous to have an improved process for the preparation of etherified oxidized phospholipids devoid of at least some of the disadvantages of processes known in the art.

### SUMMARY OF THE INVENTION

According to one aspect of the present invention there is provided a method of preparing a compound having a glycerolic backbone and at least one oxidized moiety-containing residue attached to the glycerolic backbone via an ether bond as defined in the annexed claims, which comprises: providing a first compound having a glycerolic backbone and at least one free hydroxyl group; providing a second compound having at least one unsaturated bond and at least one reactive group capable of forming an ether bond with the free hydroxyl group; reacting the first compound and the second compound to thereby obtain a third compound, the third compound having a glycerolic backbone and an unsaturated bond-containing residue being attached to the glycerolic backbone via an ether bond; isolating the third compound, to thereby obtain a purified third compound; reacting the purified third compound with an oxidizing agent, to thereby obtain a fourth compound, the fourth compound having a glycerolic backbone and an oxidized moiety-containing residue attached to the glycerolic backbone via an ether bond; and isolating the fourth compound to thereby obtain a purified-fourth compound, thereby obtaining the compound having a glycerolic backbone and at least one oxidized moiety-containing residue attached to the glycerolic backbone via an ether bond, the method being devoid of column chromatography.

According to further features in preferred embodiments of the invention described below, reacting the first compound and the second compound is carried out in the presence of a base.

According to still further features in the described preferred embodiments the base is selected from the group consisting of sodium hydroxide, lithium hydroxide, calcium hydroxide, barium hydroxide and potassium hydroxide.

According to still further features in the described preferred embodiments the reactive group is a halide.

Isolating the third compound comprises: collecting the third compound; providing a solution of the third compound in a solvent selected from petrol ether, hexane, heptane, benzene and toluene, the solvent being selected such that the third compound is soluble therein whereby impurities formed during the reacting are insoluble therein, to thereby provide a mixture including the solution of the third compound in the solvent and insoluble impurities; removing the insoluble impurities; and removing the solvent, thereby obtaining the purified third compound.

According to still further features in the described preferred embodiments the solvent is selected from the group consisting of petrol ether, hexane and benzene.

According to still further features in the described preferred embodiments the oxidizing agent is selected from the group consisting of formic acid, hydrogen peroxide, , a periodate, a perchlorate, a bismuthate, a permanganate, a chlorite, ozone, silver oxide, osmium tetraoxide and any combination thereof.

According to still further features in the described preferred embodiments the oxidized moiety is selected from the group consisting of a carboxylic acid, an ester, an aldehyde, an acetal, a ketal and a diol.

According to still further features in the described preferred embodiments the oxidized moiety is aldehyde and reacting the purified third compound with the oxidizing agent comprises: converting the purified third compound to a compound having a glycerolic backbone and a diol-containing residue attached to the glycerolic backbone via an ether bond; and oxidizing the compound having a glycerolic backbone and a diol-containing residue attached to the glycerolic backbone, to thereby obtain the fourth compound having a glycerolic backbone and an aldehyde-containing residue attached to the glycerolic backbone via an ether bond.

According to still further features in the described preferred embodiments the converting is effected by reacting the purified third compound with a first oxidizing agent selected from the group consisting of a peroxide, a bismuthate, a periodate, a permanganate, and any combination thereof.

According to still further features in the described preferred embodiments the oxidizing is effected by reacting the compound having a glycerolic backbone and a diol-containing residue attached to the glycerolic backbone with a second oxidizing agent selected from the group consisting of a periodate, a bismuthate, a permanganate, and a chlorite

According to still further features in the described preferred embodiments isolating the fourth compound comprises: collecting the fourth compound; providing a water-soluble adduct of the fourth compound; subjecting the water-soluble adduct to a biphasic system, to thereby provide an aqueous phase containing the adduct and an organic phase containing water-insoluble impurities formed during the reacting with the oxidizing agent; collecting the aqueous phase; decomposing the adduct; and collecting the fourth compound, thereby obtaining the purified fourth compound.

According to still further features in the described preferred embodiments providing the water-soluble adduct comprises: reacting the fourth compound with a Girard reagent.

According to still further features in the described preferred embodiments the oxidized moiety is a carboxylic acid and reacting the purified third compound with the oxidizing agent comprises: converting the purified third compound to a compound having a glycerolic backbone and an aldehyde-containing residue attached to the glycerolic backbone via an ether bond; and oxidizing the compound having a glycerolic backbone and an aldehyde-containing residue attached to the glycerolic backbone, to thereby obtain a compound having a glycerolic backbone and a carboxylic acid-containing residue attached to the glycerolic backbone via an ether bond.

According to still further features in the described preferred embodiments converting the purified third compound to the compound having a glycerolic backbone and an aldehyde-containing residue attached to the glycerolic backbone via an ether bond comprises: converting the purified third compound to a compound having a glycerolic backbone and a diol-containing residue attached to the glycerolic backbone via an ether bond; and oxidizing the compound having a glycerolic backbone and a diol-containing residue attached to the glycerolic backbone, to thereby obtain the compound having a glycerolic backbone and an aldehyde-containing residue attached to the glycerolic backbone via an ether bond.

According to still further features in the described preferred embodiments the method further comprises isolating the compound having a glycerolic backbone and an aldehyde-containing residue attached to the glycerolic backbone via an ether bond, to thereby obtain a purified compound having a glycerolic backbone and an aldehyde-containing residue attached to the glycerolic backbone via an ether bond.

According to still further features in the described preferred embodiments the isolating comprises: collecting the compound having a glycerolic backbone and an aldehyde-containing residue attached to the glycerolic backbone via an ether bond; providing a water-soluble adduct of the compound having a glycerolic backbone and an aldehyde-containing residue attached to the glycerolic backbone via an ether bond, as described hereinabove; subjecting the water-soluble adduct to a biphasic system, to thereby provide an aqueous phase containing the complex and an organic phase containing water-insoluble impurities formed during the converting and/or the oxidizing; collecting the aqueous phase; decomposing the adduct; and collecting the compound having a glycerolic backbone and an aldehyde-containing residue attached to the glycerolic backbone via an ether bond, thereby obtaining a purified compound having a glycerolic backbone and an aldehyde-containing residue attached to the glycerolic backbone via an ether bond.

According to still further features in the described preferred embodiments the oxidized moiety is a carboxylic acid and reacting the purified third compound with the oxidizing agent comprises: converting the purified third compound to a compound having a glycerolic backbone and an epoxide-containing residue attached to the glycerolic backbone via an ether bond; and oxidizing the compound having a glycerolic backbone and an epoxide-containing residue attached to the glycerolic backbone, to thereby obtain a compound having a glycerolic backbone and a carboxylic acid-containing residue attached to the glycerolic backbone via an ether bond.

According to still further features in the described preferred embodiments the converting comprises reacting the third compound with a peroxide.

According to still further features in the described preferred embodiments the first compound has at least two free hydroxyl groups, the method further comprising, prior to the reacting the first compound and the second compound: protecting at least one of the at least two groups with a protecting group.

According to still further features in the described preferred embodiments the protecting group is trityl.

According to still further features in the described preferred embodiments the first compound has at least two free hydroxyl groups, the method further comprising, prior to the reacting the first compound and the second compound: protecting at least one of the at least two groups with a protecting group, preferably a trityl group.

According to still further features in the described preferred embodiments, when the methods include the formation of an epoxide-containing compound, as described hereinabove, the method further comprises, prior to reacting the third compound and the oxidizing agent: replacing the trityl with a protecting group selected from the group consisting of acetate, pivaloate or benzoate.

The compound having a glycerolic backbone and at least one oxidized moiety-containing residue attached to the glycerolic backbone comprises a phosphorus-containing moiety attached to the glycerolic backbone, and the method comprises reacting the purified fourth compound with a phosphorous-containing moiety, to thereby obtain the compound having a glycerolic backbone and at least one oxidized moiety-containing residue attached to the glycerolic backbone and further having a phosphorus-containing moiety attached to the glycerolic backbone.

According to still further features in the described preferred embodiments the at least one phosphorous-containing moiety is a phosphate moiety being attached to the glycerolic backbone via a phosphodiester bond.

According to still further features in the described preferred embodiments the at least one phosphorous-containing moiety is selected from the group consisting of phosphoric acid, phosphoryl choline, phosphoryl ethanolamine, phosphoryl serine, phosphoryl cardiolipin, phosphoryl inositol, ethylphosphocholine, phosphorylmethanol, phosphorylethanol, phosphorylpropanol, phosphorylbutanol, phosphorylethanolamine-N-lactose, phosphoethanolamine-N-[methoxy(propylene glycol)], phosphoinositol-4-phosphate, phosphoinositol-4,5-biposphonate, pyrophosphate, phosphoethanolamine-diethylenetriamine-pentaacetate, dinitrophenyl-phosphoethanolamine and phosphoglycerol.

The phosphorus-containing moiety is attached to the sn-3 position of the glycerolic backbone of the compound.

According to still further features in the described preferred embodiments reacting the purified fourth compound with the phosphorus-containing moiety comprises: providing the purified fourth compound having a free hydroxyl group; reacting the purified fourth compound with a reactive phosphorus-containing compound having a second reactive group and a third reactive group, the second reactive group being capable of reacting with the free hydroxyl group and a second reactive group, to thereby provide the purified fourth compound having a reactive phosphorous-containing group attached to the glycerolic backbone; and converting the reactive phosphorus-containing group to the phosphorous-containing moiety.

According to still further features in the described preferred embodiments the reactive phosphorous-containing compound is phosphorus oxychloride (POCl₃).

According to still further features in the described preferred embodiments the reacting is carried out in the presence of a base.

According to still further features in the described preferred embodiments the phosphorus-containing moiety is phosphoric acid, and the converting comprises hydrolyzing the reactive phosophrus-containing group.

According to still further features in the described preferred embodiments the phosphorus-containing moiety comprises an aminoalkyl group and the converting comprises reacting the reactive phosophrus-containing group with a derivative of the aminoalkyl group, the derivative being selected capable of reacting with the third reactive group.

The oxidized moiety-containing residue is attached to the sn-2 position of the compound and further wherein at least one of the at least one free hydroxyl groups of the glycerolic backbone is at the sn-2 position of the first compound.

The first compound has the general formula I: 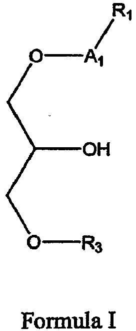 wherein:
A₁ is selected from the group consisting of CH₂, CH=CH and C=O;
R₁ is selected from the group consisting of H and a hydrocarbon chain having from 1 to 30 carbon atoms; and
R₃ is hydrogen.

The compound having a glycerolic compound and at least one oxidized moiety attached to the glycerolic backbone via an ether bond has the general Formula II: 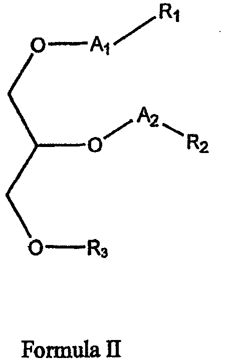 wherein:
A₁ is selected from the group consisting of CH₂, CH=CH and C=O;
A₂ is CH₂;
R₁ is an alkyl having 1-30 carbon atoms;
R₂ is 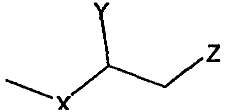
whereas:
X is an alkyl chain having 1-24 carbon atoms;
Y is selected from the group consisting of hydrogen, hydroxy, alkyl, alkoxy, halide, acetoxy and an aromatic functional group; and
Z is selected from the group consisting of:

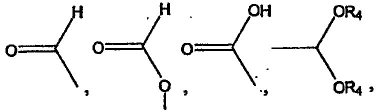

   -OH,

   with R₄ being an alkyl or aryl; and
   R₃ is selected from the group consisting of phosphoric acid, phosphoryl choline, phosphoryl ethanolamine, phosphoryl serine, phosphatidyl choline, phosphatidyl ethanolamine, phosphatidyl serine, phosphatidyl cardiolipin, phosphatidyl inositol, phosphoryl cardiolipin, phosphoryl inositol, ethylphosphocholine, phosphorylmethanol, phosphorylethanol, phosphorylpropanol, phosphorylbutanol, phosphorylethanolamine-N-lactose, phosphoethanolamine-N-[methoxy(propylene glycol)], phosphoinositol-4-phosphate, phosphoinositol-4,5-biposphonate, pyrophosphate, phosphoethanolamine-diethylenetriamine-pentaacetate, dinitrophenyl-phosphoethanolamine, phosphoglycerol.

The present invention successfully addresses the shortcomings of the presently known configurations by providing novel synthetic routes that can be beneficially used in the scaled-up preparation of oxidized phospholipids.

Unless otherwise defined, all technical and scientific terms used herein have the same meaning as commonly understood by one of ordinary skill in the art to which this invention belongs. Although methods and materials similar or equivalent to those described herein can be used in the practice or testing of the present invention, suitable methods and materials are described below. In case of conflict, the patent specification, including definitions, will control. In addition, the materials, methods, and examples are illustrative only and not intended to be limiting.

As used herein the term "mixture" describes a mixture that includes more than one substance and which can be in any form, for example, as a homogenous solution, a suspension, a dispersion, a biphasic solution and more.

As used in this application, the singular form "a", "an' and "the" include plural references unless the context clearly dictates otherwise.

Throughout this disclosure, various aspects of this invention can be presented in a range format. It should be understood that the description in range format is merely for convenience and brevity and should not be construed as an inflexible limitation on the scope of the invention. Accordingly, the description of a range should be considered to have specifically disclosed all the possible subranges as well as individual numerical values within that range. For example, description of a range such as from 1 to 6 should be considered to have specifically disclosed subranges such as from 1 to 3, from 1 to 4, from 1 to 5, from 2 to 4, from 2 to 6, from 3 to 6 etc., as well as individual numbers within that range, for example, 1, 2, 3, 4, 5, and 6. This applies regardless of the breadth of the range.

Whenever a numerical range is indicated herein, it is meant to include any cited numeral (fractional or integral) within the indicated range. The phrases "ranging/ranges between" a first indicate number and a second indicate number and "ranging/ranges from" a first indicate number "to" a second indicate number are used herein interchangeably and are meant to include the first and second indicated numbers and all the fractional and integral numerals therebetween.

As used herein throughout, the terms "comprising", "including" and "containing" means that other steps and ingredients that do not affect the final result can be added. These terms encompass the terms "consisting of" and "consisting essentially of".

The phrase "consisting essentially of" means that the composition or method may include additional ingredients and/or steps, but only if the additional ingredients and/or steps do not materially alter the basic and novel characteristics of the claimed composition or method.

The term "method" or "process" refers to manners, means, techniques and procedures for accomplishing a given task including, but not limited to, those manners, means, techniques and procedures either known to, or readily developed from known manners, means, techniques and procedures by practitioners of the chemical, pharmacological, biological, biochemical and medical arts.

The term "phospholipid" is used herein to collectively describe compounds that include a non-polar lipid group and a highly polar end phosphate group. One particular and most prevalent in nature family of phospholipid compounds is the phosphoglycerides family of compounds. The term "phospholipid" is therefore typically used herein throughout to describe phosphoglycerides, unless otherwise indicated.

The term "phosphoglyceride" is therefore used herein to describe compounds having a glycerol backbone, one or more lipid moieties and one or more phosphate end group, which are attached to the glycerolic backbone. Most of the naturally-occurring glycerolipids include two lipid moieties attached to the *sn-1* and *sn-2* positions and one phosphate moiety attached to the *sn-3* position of the glycerol backbone.

The term "oxidized phospholipid" is therefore used herein to describe a phospholipid, as well as a phosphoglyceride, which includes one or more oxidized moieties, as this term is described hereinbelow. Typically, in oxidized phospholipids, the oxidized moiety is included within a lipid moiety.

The term "glycerolipid" describes a compound having a glycerolic backbone and one or two lipid moieties attached thereto. The lipid moieties can be attached to the glycerol backbone via an ester and/or an ether bond.

As used herein, the term "lipid" describes a hydrocarbon residue having 3-30 carbon atoms. In naturally-occurring compounds, the lipids in phospholipids and glycerolipids are derived from fatty acids and are therefore attached to the backbone via an O-acyl (ester) bond. Herein, the lipid moiety can be attached to the backbone either via and ether or an ester bond.

As used herein, the terms "mono-esterified" and "di-esterified" with respect to phospholipids or glycerolipids, describe phospholipids or glycerolipids, either oxidized or non-oxidized, in which one or two of the lipid moieties, respectively, are attached to the glycerol backbone via an ester (e.g., O-fatty acyl) bond.

As used herein, the terms "mono-etherified" and "di-etherified" with respect to phospholipids or glycerolipids, describe phospholipids or glycerolipids, either oxidized or non-oxidized, in which one or two of the lipid moieties, respectively, are attached to the glycerol backbone via an ether bond.

The term "phosphoglycerol" describes a compound having a glycerolic backbone and a phosphate group attached to one position thereof.

The term "phosphoglycerides" describes a compound having a glycerolic backbone, one or two lipid moieties and a phosphate moiety attached thereto.

The term "mono-etherified phosphoglyceride" describes a phosphoglyceride, in which a lipid moiety is attached to the glycerolic backbone via an ether bond.

As used herein, the term "moiety" describes a functional substance or group which forms a part of a compound.
The.term "residue" as is well known in the art, is used to described a major portion of a molecule that is linked to another molecule.

### DESCRIPTION OF THE PREFERRED EMBODIMENTS

The present invention is of novel methods of preparing oxidized phospholipids which can be efficiently used for a scaled up production of such oxidized phospholipids. Specifically, the present invention is of novel methods of introducing an oxidized moiety to a compound having a glycerolic backbone and is further of novel methods of introducing a phosphorous-containing moiety to such a compound. The novel methods described herein are devoid of column chromatography and typically use commercially available and environmental friendly reactants.

The principles and operation of the novel synthetic methods according to the present invention may be better understood with reference to the accompanying descriptions.

Before explaining at least one embodiment of the invention in detail, it is to be understood that the invention as defined by the annexed claims is not limited in its application to the details set forth in the following description or exemplified by the Examples. The invention is capable of other embodiments or of being practiced or carried out in various ways.

As discussed hereinabove, it has been recently reported that well-defined, synthetically prepared oxidized phospholipids can regulate the immune response to oxidized LDL and are thus highly effective in treating atherosclerosis and related diseases, as well as autoimmune diseases and inflammatory disorders. It has been further reported that generally, etherified oxidized phospholipids are superior to comparable esterified oxidized phospholipids as therapeutic agents.

These highly beneficial oxidized phospholipids typically include a glycerolic backbone, to which a lipid residue, a phosphate residue and an oxidized moiety-containing lipid residue are attached, as is described in detail, for example, in U.S. Patent No. 6,838,452 and in WO 04/106486.

As is further discussed hereinabove, the presently known methods of preparing such well-defined synthetic oxidized phospholipids involve multi-step syntheses. While these multi-step syntheses were found to be relatively efficient, resulting in moderate to good yield, these methods are limited by the need to perform laborious isolation and purification procedures of the various intermediates formed throughout the syntheses. Particularly, these procedures typically involve techniques such as column chromatography, which, as is widely recognized by a skilled artisan, is industrially inapplicable, or at least inefficient in terms of costs, complexity and use of excessive amounts of organic solvents, which may be hazardous and requires special care of the waste disposal. The need to use column chromatography in these methods stems from the fact that the intermediates, as well as the final products formed during these multi-step syntheses, cannot be isolated and/or purified by more conventional techniques such as extraction, crystallization and the like.

Since such synthetically prepared oxidized phospholipids exhibit exceptionally beneficial therapeutic activity, it is highly desired to prepare these compounds in a high level of purity. Furthermore, since the preparation of such oxidized phospholipids involves multi-step syntheses, purification of the intermediates is required in order to perform such a process is reasonable yields and with minimal amount of side products.

In a search for novel methods of preparing oxidized phospholipids, which could be efficiently utilized in the scaled-up production of these compounds, while circumventing the need to use laborious techniques such as column chromatography, the present inventors have designed and successfully practiced novel synthetic methodologies for introducing an oxidized moiety and/or a phosphate moiety to compounds that have a glycerolic backbone, which circumvent the disadvantageous use of column chromatography and which result in relatively high yield of pure compounds. The methods described herein further typically utilize commercially available, non-hazardous reactants, which further provides for the industrial applicability thereof.

The novel synthetic methodologies described herein can be divided as follows:
(i) a novel method of introducing an oxidized moiety to a compound having a glycerolic backbone, via introduction of an unsaturated moiety and oxidation of the unsaturated moiety, whereby upon said oxidation the oxidized moiety-containing compound is isolated and purified by means of a water-soluble adduct;
(ii) a novel method of introducing an oxidized moiety to a compound having a glycerolic backbone, via introduction of an unsaturated moiety and oxidation of the unsaturated moiety, whereby said oxidation is performed via an epoxide intermediate and in the presence of a selective protecting group;
(iii) a novel method of introducing a phosphate moiety to a glycerolipid having an oxidized moiety attached thereto, via introduction of a reactive phosphorous-containing group.

Due to the superior performance of oxidized phospholipids in which the oxidized moiety containing residue is attached to the backbone via an ether bond, these methods are all directed for the attachment of the oxidized moiety-containing residue to the glycerolic backbone via an ether bond.

As is demonstrated in the Examples section that follows, using these methodologies, well-defined oxidized phospholipids, have been successfully prepared in relatively high yield and purity.

Thus, according to one aspect of the present invention there is provided a method of preparing a compound having a glycerolic backbone and at least one oxidized moiety-containing residue attached to the glycerolic backbone via an ether bond as defined in the annexed claims which is devoid of column chromatography. The method, according to this aspect of the present invention, comprises:
providing a first compound having a glycerolic backbone and at least one free hydroxyl group;
providing a second compound having at least one unsaturated bond and at least one reactive group capable of forming an ether bond with said free hydroxyl group;
reacting the first compound and the second compound to thereby obtain a third compound, which has a glycerolic backbone and an unsaturated bond-containing residue being attached to the glycerolic backbone via an ether bond;
isolating the third compound, to thereby obtain a purified third compound;
reacting the purified third compound with an oxidizing agent, to thereby obtain a fourth compound, which has a glycerolic backbone and an oxidized moiety-containing residue attached to the glycerolic backbone via an ether bond; and
isolating the fourth compound to thereby obtain a purified fourth compound, thereby obtaining the compound having a glycerolic backbone and at least one oxidized moiety-containing residue attached to the glycerolic backbone via an ether bond.

As used herein throughout, the phrase "a compound having a glycerolic backbone", which is also referred to herein interchangeable as "a glycerolic compound", or a "glycerol compound" describes a compound that includes the following skeleton:

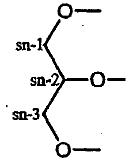

As used herein throughout, the phrases "oxidized moiety" and "an oxidized moiety-containing residue", which are used herein interchangeably, describe an organic moiety in which at least one of its carbon atoms is substituted by an oxygen atom as defined for the compound of formula (II). Examples, without limitation, include aldehyde, carboxylic acid, carboxylic ester, diol, acetal, and ketal. The phrases "a compound having an oxidized moiety-containing residue" and "an oxidized moiety-containing compound" are also used herein interchangeably.

The method according to this aspect of the present invention is based on introducing an unsaturated moiety to the glycerolic compound and subjecting the unsaturated bond to oxidative cleavage. However, while such a synthetic route has been employed in the presently known syntheses of glycerolic oxidized phospholipids, the present inventors have now designed and successfully practiced such a process in which the glycerolic compound that has an oxidized moiety attached thereto can be isolated and purified without using column chromatography.

Introduction of the unsaturated moiety to the glycerolic compound is typically performed using methods known in the art, such as described, for example, in U.S. Patent No. 6,838,452.

A first compound having general formula (I), which has a glycerolic backbone and at least one free hydroxyl group is selected as the starting material.

A compound that has an unsaturated moiety and a first reactive group, which is also referred to herein as the second compound is obtained, either commercially or using methods known in the art, and is reacted with the glycerolic starting material.

The first reactive group is selected capable of reacting with the free hydroxyl group. Reacting with the free hydroxyl group so as to form an ether bond is typically performed via a nucleophilic mechanism and therefore the first reactive group is preferably characterized as a good leaving group and can be, for example, halide, sulfonate, and any other leaving group.

Preferably, the reactive group is halide and more preferably, it is bromide.

The second compound is preferably selected such that the unsaturated moiety is present at an end thereof, so as to facilitate the oxidation reaction that follows. By "unsaturated moiety" it is meant herein a moiety that includes at least two carbon atoms that are linked therebetween by an unsaturated bond, e.g., a double bond or a triple bond, preferably a double bond.

Further preferably, the second compound comprises from 4 to 30 carbon atoms, more preferably from 4 to 27 carbon atoms, more preferably from 4 to 16 carbon atoms, more preferably from 4 to 10 carbon atoms, more preferably from 4 to 8 carbon atoms, and most preferably the second compound comprises 6 carbon atoms.

Reacting the first compound and the second compound described herein is typically performed in the presence of a base. Suitable bases for use in this context of the present invention include, without limitation, inorganic bases such as sodium hydroxide, lithium hydroxide, calcium hydroxide, barium hydroxide and potassium hydroxide.

Reacting the first compound and the second compound is typically performed in the presence of a solvent. Suitable solvents for use in this context of the present invention include, without limitation, non polar solvents such as petrol ether, hexane, benzene and toluene.

In cases where it is desired to perform the reaction selectively, namely, introducing the unsaturated moiety to a certain position of the glycerolic backbone, any free hydroxyl group other than the reacting hydroxyl, if present, should be protected prior to the reaction.

Thus, in such cases, the method according to this aspect of the present invention optionally and preferably further comprises, prior to reacting the first compound and the second compound, protecting one or more additional free hydroxyl groups that may be present within the first compound.

Any of the known hydroxyl-protecting groups can be used in this context of the present invention. According to preferred embodiment of this aspect of the present invention, the protecting group is trityl.

Trityl is a bulky group, which typically serves as a selective protecting group, due to steric hindrance. Thus, while reacting a glycerolic compound that has more than one free hydroxyl group, typically, the trityl group would be reacted with the less hindered group.

As noted hereinabove and is further discussed in detail in U.S. Patent No. 6,838,452 and in WO 04/106486, the position of the glycerolic backbone to which an oxidized moiety is attached affects the activity of the compound. It is therefore highly beneficial to perform the preparation of the glycerolic compounds described herein selectively, such that the oxidized moiety-containing residue would be attached to the desired position. As is further demonstrated in U.S. Patent No. 6,838,452, oxidized phospholipids that have an oxidized moiety-containing residue attached to the *sn-2* position of the glycerol backbone exhibit a superior performance.

To that end, the use of trityl group as the protecting group while introducing the above-described second compound to the glycerolic backbone is highly beneficial, since due to its bulkiness, protection of the hydroxyl end groups, at the *sn-1* and/or *an-3* positions would be effected, leaving the hydroxyl group at the sn-2 available for further substitutions. Once the reaction between the first compound and the second compound is completed, a reaction mixture which contains a compound that has a glycerolic backbone and an unsaturated moiety-containing residue attached thereto via an ether bond is obtained. Such a compound is also referred to herein interchangeably as a third compound.

Depending on the starting material used, the third compound can further include one or more protecting groups, protecting free hydroxyl groups that may be present within the glycerolic backbone.

The third compound, either protected or deprotected, is then isolated from the reaction mixture and treated so as to obtain a purified compound.

Isolating the third compound is performed by first collecting the formed third compound. Collecting the third compound is typically performed using conventional techniques such as extraction, removal of the solvent, filtration and the like, including any combination thereof. Once collected, the crude product is dissolved is a solvent, whereby the solvent is selected such that the third compound is soluble therein whereby impurities formed during the reaction between the first and the second compounds are insoluble therein.

The term "impurities" is used herein to describe any substance that is present in the final crude product and is not the product itself and include, for example, unreacted starting materials and side products.

Using such a solvent, a mixture that includes a solution of the third compound in such a solvent and insoluble substances is obtained. Suitable solvents for use in this context of the present invention are selected from petrol ether, hexane, benzene, heptane and toluene. Preferably, the solvent is petrol ether.

The insoluble impurities are then removed from the mixture, preferably by filtration, the solvent is removed and a purified third compound is obtained while circumventing the need to use column chromatography in the purification procedure thereof.

The purified third compound is then reacted with an oxidizing agent, so as to oxidize the unsaturated moiety and thereby obtain a fourth compound, in which an oxidized moiety-containing residue is attached to the glycerolic backbone via an ether bond.

The oxidizing agent is selected depending on the desired oxidized moiety, as is detailed hereinbelow, and can be, for example, a peroxide, a periodate, a bismuthate, a permanganate, a chlorite, ozone, silver oxide, osmium tetraoxide and any combination thereof.

As used herein, the term "periodate" describes a compound having the formula XIO₄, wherein X can be hydrogen (for periodic acid) or a monovalent cation of a metal (e.g., sodium, potassium).

The term "bismuthate" describes a compound having the formula XBiO₃, wherein X can be hydrogen or a monovalent cation of a metal (e.g., sodium, potassium).

The term "permanganate" describes a compound having the formula XMnO₄, wherein X can be hydrogen or a monovalent cation of a metal (e.g., sodium, potassium).

The term "chlorite" describes a compound having the formula XClO₂, wherein X can be hydrogen or a monovalent cation of a metal (e.g., sodium, potassium).As used herein, the term "peroxide" include a compound having the formula R-O-O-H, wherein R can be hydrogen, alkyl, cycloalkyl, aryl, oxyalkyl, oxycycloalkyl and oxyaryl, as these terms are defined herein.

As used herein throughout, the term "alkyl" refers to a saturated aliphatic hydrocarbon including straight chain and branched chain groups. Preferably, the alkyl group has 1 to 20 carbon atoms.

A "cycloalkyl" group refers to an all-carbon monocyclic or fused ring (*i.e.*, rings which share an adjacent pair of carbon atoms) group wherein one of more of the rings does not have a completely conjugated pi-electron system. Examples, without limitation, of cycloalkyl groups are cyclopropane, cyclobutane, cyclopentane, cyclopentene, cyclohexane, cyclohexadiene, cycloheptane, cycloheptatriene, and adamantane.

An "aryl" group refers to an all-carbon monocyclic or fused-ring polycyclic (*i.e.*, rings which share adjacent pairs of carbon atoms) groups having a completely conjugated pi-electron system. Examples, without limitation, of aryl groups are phenyl, naphthalenyl and anthracenyl.

The terms "oxyalkyl", "oxycycloalkyl" and "oxyaryl" describe an R'-C(=O)-group, whereby R' is alkyl, cycloalkyl or aryl, respectively, such that the peroxide is a peroxycarboxylic acid.

Preferably, the peroxide is hydrogen peroxide or a peroxycarboxylic acid. Thus, in one embodiment of this aspect of the present invention, the oxidized moiety is aldehyde and reacting the third compound with an oxidizing agent is performed by first converting the unsaturated moiety in the third compound to a diol moiety, preferably by means of an oxidizing agent, which is referred to herein as a first oxidizing agent; and then further oxidizing the diol moiety, by means of a second oxidizing agent, to the aldehyde moiety.

The first and the second oxidizing agents can be the same or different and can be, for example, a peroxide, a periodate, a bismuthate, a permanganate, a chlorite, ozone and any combination thereof.

In cases where the first and the second oxidizing agents are the same, and depending on the oxidizing agent used, converting the unsaturated moiety to a diol moiety and oxidizing the diol moiety can be performed simultaneously. Suitable oxidizing agents that can be used in this respect include oxidizing agents that are capable of inducing an oxidative cleavage of an unsaturated moiety such as, for example, ozone, osmium tetraoxide, and potassium permanganate.

In cases where the first and the second oxidizing agents are different, preferably the first oxidizing agent is a peroxide, such as hydrogen peroxide and the second oxidizing agent is, for example, a periodate or a bismuthate.

The reaction conditions at which the converting and oxidizing procedures are performed are determined in accordance with the oxidizing agent used.

In a preferred embodiment of this aspect of the present invention, the first and the second oxidizing agents are different and converting the unsaturated moiety to a diol moiety and oxidizing the diol moiety are performed sequentially. Further according to a preferred embodiment of this aspect of the present invention, once the diol is obtained, the protecting group, if present, is removed so as to obtained as compound having three or more free hydroxyl groups (herein, a triol). Such a compound can be easily purified, prior to its oxidation to an aldehyde, by means of crystallization due to its unique chemical features, as is demonstrated in the Examples section the follows (see, Example 1). Once purified, selective protection the free hydroxyl group at the *sn-1* and/or *sn-3* positions can be effected, prior to the next synthetic step.

The thus formed aldehyde-containing glycerolic compound, is then isolated from the reaction mixture and purified.

In a preferred embodiment of this aspect of the present invention, the aldehyde is purified by means of forming a water-soluble adduct thereof.

Thus, once the reaction with the oxidizing agent(s) is completed, the aldehyde-containing fourth compound is collected using conventional techniques as described herein above and thereafter the crude product is converted into a water-soluble adduct thereof. By performing such a conversion in a biphasic system, an aqueous phase that contains the water-soluble adduct and an organic phase, which contains water-insoluble impurities are obtained. Since most of the side products and unreacted material formed during the oxidation reaction are organic substances, such substances are easily separated from the water-soluble adduct by collecting the aqueous phase. The aldehyde-containing compound is thereafter recovered by decomposing the water-soluble adduct.

Suitable water-soluble adducts that can be used in this context of the present invention are preferably obtained by reacting the aldehyde-containing compound with a Girard reagent

Girard reagents are a family of substances that are capable of forming water-soluble hydrazone adducts with carbonyl-containing compounds, and thus allow the separation of carbonyl-containing compounds from other organic non-carbonylic compounds. Girard reagents are ionic derivatives of semicarbazide.

The T form is (Carboxymethyl)trimethylammonium chloride hydrazide:

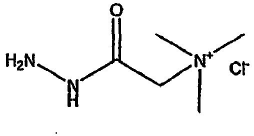

The D form is (Carboxymethyl)dimethylammonium chloride hydrazide:

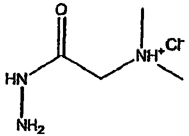

And the P form is 1-(Carboxylmethyl)pyridinium chloride hydrazide:

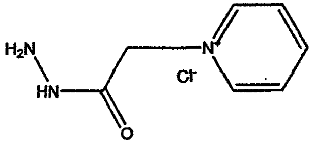

Thus, by converting the aldehyde-containing compound to a water-soluble adduct thereof with a Girard reagent, a purified fourth compound is easily and conveniently obtained, while avoiding the use of column chromatography.

In cases where the oxidized moiety is a carboxylic acid, reacting the third compound with an oxidizing agent can be performed by first providing an aldehyde-containing compound, optionally and preferably as described hereinabove, and further optionally and preferably, by providing a purified aldehyde-containing compound, using the methodology described hereinabove, and thereafter further oxidizing the aldehyde to carboxylic acid.

Oxidizing the aldehyde to a carboxylic acid is preferably performed by reacting the aldehyde with an oxidizing agent such as chlorite.

Alternatively, the unsaturated moiety can be oxidized to a carboxylic acid via an epoxide intermediate.

Thus, reacting the third compound with an oxidizing agent can be performed by converting the unsaturated moiety to epoxide, and converting the epoxide to the carboxylic acid. Preferably, converting the epoxide to a carboxylic acid is performed by converting the epoxide to diol and oxidizing the diol so as to obtain the carboxylic acid moiety.

Converting the third compound to an epoxide is preferably performed by reacting the third compound with a peroxide, as defined hereinabove, and more preferably with a peroxycarboxylic acid.

Converting the epoxide to diol is preferably performed by reacting the epoxide with perchloric acid (HClO₄). Alternatively, the epoxide is converted to diol by reacting it with sulfuric acid.

The diol is then converted to the carboxylic acid by reacting it with a third oxidizing agent. The third oxidizing agents can be selected from periodate, bithmutate, permanganate, chlorite and any combination thereof. Preferably, the diol is converted to the carboxylic acid by reacting it with a periodate, followed by a chlorite.

The fourth compound thus obtained, having a glycerolic backbone and a carboxylic acid-containing moiety attached thereto via an ether bond, in then purified so as to obtain a purified product.

The present inventors have now surprisingly found that a fourth compound obtained via the epoxide intermediate can be easily purified, while avoiding the use of column chromatography, if a free hydroxyl group thereof is protected by a protecting group such as acetate, pivaloate or benzoate.

As mentioned hereinabove, a free hydroxyl group, if present in the glycerol backbone, is preferably protected, whereby a preferable, selective protecting group is trityl. However, since trityl is a large, bulky and a-polar moiety, its presence might, in some cases, complicate the isolation and purification procedures of the various intermediates and the final product.

The present inventors have now uncovered that limitations associated with the trityl group can be readily circumvented by: (i) isolating an aldehyde-containing compound via the formation of a water-soluble adduct thereof, as is widely described, hereinabove; or (ii) replacing the trityl protecting group by a less bulky group, subsequent to the introduction of the second compound. In addition, as described hereinabove, when oxidizing the third compound comprises the formation of a diol, once the diol is forms, the trityl protecting group can be removed and the resulting triol can be isolated by means of crystallization,

Thus, according to a preferred embodiment of the present invention, the process further comprises, subsequent to the provision of the purified third compound and/or prior to reacting the third compound with an oxidizing agent: replacing the trityl group with a protecting group selected from the group consisting of acetate, pivaloate or benzoate.

Replacing the trityl protecting group is typically effected by removing the trityl group, so as to obtain a free hydroxyl group and protecting the hydroxyl group with the desired protecting group.

Protecting the hydroxyl group with an acetate group is readily performed by reacting the third compound with e.g., acetic anhydride. Protecting the hydroxyl group with a pivaloate group is readily performed by reacting the third compound with e.g., pivaloyl chloride. Protecting the hydroxyl group with a benzoate group is readily performed by reacting the third compound with e.g., benzoyl choride.

Purifying a fourth compound, as described herein, which has an acetate, pivaloate or benzoate protecting group can be carried out by conventional extraction techniques, preferably while using silica gel during the extraction procedure.

As is demonstrated in the Examples section that follows (see, Example 2), it was found that preparing a glycerolic compound having an oxidized moiety-containing group attached thereto via an ether bond, via the formation of an epoxide-containing intermediate that has an acetate protecting group, resulted in highly purified compound and high reaction yield.

In cases where the obtained fourth compound has a protecting group, as described hereinabove, once the fourth compound is obtained and purified, the protecting group is removed.

In cases where the oxidized moiety is an ester, the process is effected by providing a carboxylic-acid containing compound and then converting the carboxylic acid to the ester. This can be readily carried out, using procedures well known in the art.

As is discussed hereinabove, compounds having a glycerolic backbone and at least one oxidized moiety-containing residue attached to the glycerolic backbone and further having a phosphorus-containing moiety attached to the glycerolic backbone, preferably a phosphate-containing moiety, are known as oxidized phospholipids and are highly beneficial in treating various conditions. Thus, the process described herein further comprises introduction of such a phosphorus-containing moiety to the glycerolic backbone.

As used herein, the phrase "phosphorus-containing moiety" describes a moiety, as defined herein, which includes one or more phosphor atoms. Representative examples include, without limitation, phosphates, phosphonates, phosphines, phosphine oxides, phosphites, pyrophosphates and like.

As used herein the term "phosphonate" describes a -P(=O)(OR')(OR") group, where R' and R" are each independently hydrogen, or substituted or unsubstituted alkyl, cycloalkyl or aryl, as defined herein.

The term "phosphinyl" describes a -PR'R" group, with R' and R" as defined hereinabove.

The term "phosphine oxide" describes a -P(=O)(R')(R") end group or a -P(=O)(R')- linking group, as these phrases are defined hereinabove, with R' and R" as defined herein.

The terms "pyrophosphate" describes an -O-P(=O)(OR')-O-P(=O)(OR')(OR'')(OR"') group, with R', R" as defined herein, and R"' is defined as R' or R".

The term "phosphite" describes an -O-PH(=O)(OR') group, with R' as defined herein.

The term "phosphate" describes an -O-P(=O)₂(OR') group, with R' as defined herein.

The term "thiophosphate" describes an -O-P(=O)(=S)(OR') group, with R' as defined herein.

The introduction of a phosphorus-containing moiety to the glycerolic compound can be performed using any of the methods known in the art.

Introduction of a phosphorus-containing moiety to a compound, having a glycerolic compound is therefore performed by:
reacting the purified fourth compound described above, with a phosphorus-containing moiety, so as to obtain a compound having a glycerolic backbone and at least one oxidized moiety-containing residue attached to the glycerolic backbone and further having a phosphorus-containing moiety attached to the glycerolic backbone.

According to a preferred embodiment of the present invention, the phosphorus-containing moiety is a phosphate moiety which is attached to the glycerolic backbone via a phosphodiester bond

Thus, the phosphorus-containing moiety can be, for example, phosphoric acid, phosphoryl choline, phosphoryl ethanolamine, phosphoryl serine, phosphoryl cardiolipin, phosphoryl inositol, ethylphosphocholine, phosphorylmethanol, phosphorylethanol, phosphorylpropanol, phosphorylbutanol, phosphorylethanolamine-N-lactose, phosphoethanolamine-N-[methoxy(propylene glycol)], phosphoinositol-4-phosphate, phosphoinositol-4,5-biposphonate, pyrophosphate, phosphoethanolamine-diethylenetriamine-pentaacetate, dinitrophenyl-phosphoethanolamine and phosphoglycerol.

Preferably, since the phosphorus-containing moiety is attached to the *sn*-3 position of the glycerolic backbone, introduction of such a moiety is performed selectively, by appropriately protecting other free hydroxyl groups that are present in the reacting compound or deprotecting a protected hydroxyl group at the desired position.

In the presently known methods of preparing oxidized phospholipids, the phosphorus-containing moiety is typically introduced prior to the provision of an oxidized-moiety containing compound.

In addition, in cases where the phosphorus-containing moiety is phosphoryl choline, a widely used and beneficial moiety in such compounds, the presently known methods involve N-alkylation reactions, which involve hazardous and environmentally unfriendly reagents such as, for example, trimethylamine.

The present inventors have now uncovered that (i) a phosphorus-containing moiety can be readily introduced subsequent to the provision of an oxidized moiety-containing compound; and (ii) the introduction of the phosphorous-containing moiety can be efficiently performed via a reactive phosphorus-containing intermediate.

Based on the above, the present inventors have designed and successfully practiced a novel process for introducing a phosphorus-containing moiety to compounds having a glycerolic backbone and an oxidized moiety-containing residue attached thereto via an ether bond.

This process, as part of the process described above for preparing the oxidized moiety-containing compound, can be beneficially used for preparing the therapeutically beneficial oxidizes phospholipids described above.

The introduction of the phosphorus-containing moiety is performed subsequent to the production of the fourth compound.

The introduction of a phosphorus-containing moiety to a glycerolic compound is therefore preferably effected, according to the present embodiments, by reacting a purified fourth compound as described above, which has a free hydroxyl group, with a reactive phosphorus-containing compound, so as to produce a compound having a reactive phosphorus-containing group; and converting the reactive phosphorous-containing group to the phosphorus-containing moiety.

The reactive phosphorus-containing compound is selected such that upon said reacting, a reactive phosphorus-containing group attached to the glycerolic backbone is obtained. The reactive phosphorus-containing compound is therefore selected as having a second reactive group and a third reactive group, whereby the second reactive group is selected capable of reacting with the free hydroxyl group and the third reactive group is selected capable of being converted to the phosphorus-containing moiety.

Reactive groups that are capable of reacting with a free hydroxyl groups include, for example halides, sulfonyl chlorides, acyl halides and the like.

Preferably the second reactive group is halide and more preferably it is chloride.

While as described hereinabove, preferable phosphorus-containing moieties are phosphate moieties, converting the phosphorus-containing compound to the desired phosphorus-containing moiety typically involve a formation of a phosphate-ester bond. Such a bond can be obtained, for example, by reacting a phosphoric derivative such as phosphoryl chloride with a hydroxy-containing moiety.

Thus, according to a preferred embodiment, the reactive phosphorus-containing compound is phosphorus oxychloride (POCl₃), such that the third and the second reactive groups are both chlorides and the compound having a phosphorus-containing reactive group has a glycerolic backbone and a phosphoryl chloride residue attached thereto.

Reacting the purified fourth compound with the phosphorus oxychloride is typically carried out in the presence of a base. Suitable bases include organic and inorganic bases, with organic bases being preferred. Thus, the reaction is preferably effected in presence of a base such as, for example, trialkylamine (e.g., triethylamine).

This reaction is further preferably carried out in the presence of a solvent, preferably a polar solvent such as THF.

The phosphoryl chloride-containing glycerolic containing compound obtained by the process described herein can be readily converted to any desired phosphorus-containing moiety and is therefore a highly beneficial intermediate.

Thus, for exainple, it can be converted to phosphoric acid by a simple hydrolysis thereof, as is exemplified in the Examples section that follows.

Alternatively, it can be reacted with a hydroxy-containing moiety, and optionally and preferably also with water, to thereby obtain other phosphate moieties.

Preferred phosphate moieties that are incorporated in therapeutic oxidized phospholipids (e.g., phosphoryl choline, phosphoryl ethanolamine) typically include an aminoalkyl group, which can be further N-alkylated.

Converting the phosphoryl chloride intermediate to such phosphate moieties can thus be readily performed by reaction with a derivative of the desired aminoalkyl group, selected capable of reacting with the third reactive group (being a chloride).

Thus, for example, aminoalkyl-containing phosphate moieties can be obtained by reacting the phosphoryl chloride intermediate with an aminoalcohol. If desired, the aminoalcohol can thereafter be further alkylated, so as to produce an N-alkylated aminoalkyl phosphate moiety, as in the case of a phosphoryl choline moiety.

Obtaining such an N-alkylated aminoalkyl phosphate moiety attached to a glycerolic backbone using the process described above is highly beneficial since it circumvents the need to use hazardous materials such as the trimethylamine typically used for obtaining such compounds.

In any of the processes described herein the oxidized moiety-containing residue is attached to the sn-2 position of the compound. Thus, by appropriately selecting and/or protecting the first compound, selective attachment of the oxidized moiety-containing residue is performed.

In the present invention, the first compound has the following general formula I: 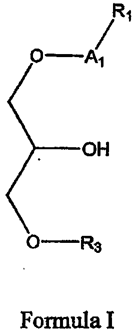 wherein:
A₁ is selected from the group consisting of CH₂, CH=CH and C=O;
R₁ is selected from the group consisting of H and a hydrocarbon chain having from 1 to 30 carbon atoms; and
R₃ is hydrogen.

Using any of the processes described hereinabove, a compound having the following general Formula II is obtained: 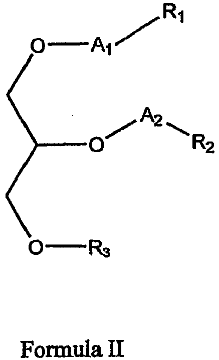 wherein:
A₁ is selected from the group consisting of CH₂, CH=CH and C=O and is preferably CH₂;
A₂ is CH₂;
R₁ is an alkyl having 1-30 carbon atoms;
R₂ is 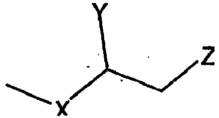
whereas:
X is an alkyl chain having 1-24 carbon atoms;
Y is selected from the group consisting of hydrogen, hydroxy, alkyl, alkoxy, halide, acetoxy and an aromatic functional group; and
Z is selected from the group consisting of:

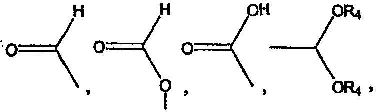

   -OH,

   with R₄ being an alkyl or aryl; and
   R₃ is selected from the group consisting of phosphoric acid, phosphoryl choline, phosphoryl ethanolamine, phosphoryl serine, phosphatidyl choline, phosphatidyl ethanolamine, phosphatidyl serine, phosphatidyl cardiolipin, phosphatidyl inositol, phosphoryl cardiolipin, phosphoryl inositol, ethylphosphocholine, phosphorylmethanol, phosphorylethanol, phosphorylpropanol, phosphorylbutanol, phosphorylethanolamine-N-lactose, phosphoethanolamine-N-[methoxy(propylene glycol)], phosphoinositol-4-phosphate, phosphoinositol-4,5-biposphonate, pyrophosphate, phosphoethanolamine-diethylenetriamine-pentaacetate, dinitrophenyl-phosphoethanolamine, phosphoglycerol.

Additional objects, advantages, and novel features of the present invention will become apparent to one ordinarily skilled in the art upon examination of the following examples, which are not intended to be limiting. Additionally, each of the various embodiments and aspects of the present invention as delineated hereinabove and as claimed in the claims section below finds experimental support in the following examples.

### EXAMPLES

Reference is now made to the following examples, which together with the above descriptions, illustrate the invention in a non limiting fashion.

### General Synthetic Pathways:

According to the teachings of the present invention, several general synthetic concepts are used for preparing oxidized phospholipids, as follows:
(i) Preparation of a glycerolipid compound having at least one oxidized moiety-containing residue attached hereto via an ether bond, by attachment of an unsaturated residue to a glycerolipid and oxidizing the unsaturated bond, while using a Girard reagent and/or crystallization of a triol-containing compound for isolating the oxidized product, as exemplified in Example 1 and Schemes I-V;
(ii) Preparation of a glycerolipid compound having at least one oxidized moiety-containing residue attached thereto via an ether bond, by attachment of an unsaturated residue to a glycerolipid and oxidizing the unsaturated bond via an epoxide intermediate, while using an acetoxy protecting group, as exemplified in Example 2 and Schemes VI-X;
(iii) Preparation of a glycerolipid compound having at least one oxidized' moiety-containing residue attached thereto via an ether bond by direct introduction of an oxidized moiety-containing compound, as exemplified in Example 3 and Scheme XI for reference purposes; and
(iv) Introduction of a reactive phosphorus-containing moiety to a glycerolipid compound having one or two oxidized (or pre-oxidized) moiety-containing residues attached thereto via an ether bond using a reactive phosphorus-containing compound (for example, phosphorous dichloride) for forming a reactive intermediate, as exemplified in Examples 4 and Schemes XII-XIV for reference purposes, and in Example 5.

Thus, Example 1 illustrates the preparation of a third and a fourth compound, Example 2 illustrates the preparation of a fourth compound and Example 5 illustrates the introduction of a phosphorus containing moiety into a fourth compound.

### EXAMPLE 1

### Preparation of rac-1-hexadecyl-2-(5'-pentanoic methyl ester)-glycerol using periodate and a Girard T reagent

In this example, an unsaturated moiety is introduced into a glycerolic backbone and is thereafter oxidized by means of formic acid, hydrogen peroxide and periodate. Then thus formed oxidized product is purified by means of a Girard reagent

As a representative example, the preparation of rac-1-hexadecyl-2-(5'-pentanoic methyl ester)-glycerol is hereby described.

rac-1-Hexadecyl-2-(5'-pentanoic methyl ester)-glycerol is prepared in accordance with the teachings of the present invention, as is described in Schemes I through V below.

1-Hexadecyl-3-tritylglycerol was prepared as described in U.S. Patent No: 6,838,452. In brief, D-acetone glycerol (4 grams), powdered potassium hydroxide (approximately 10 grams) and hexadecyl bromide (9.3 grams) in benzene (100 ml) were stirred and refluxed for 5 hours, while removing the water formed by azeotropic distillation (compare W. J. Baumann and H. K. Mangold, J. Org. Chem. 29: 3055, 1964 and F. Paltauf, Monatsh. 99:1277, 1968). The volume of the solvent was gradually reduced to about 20 ml, and the resulting mixture was cooled to room temperature and dissolved in ether (100 ml). The resulting solution was washed with water (2 x 50 ml), and the solvent was removed under reduced pressure. A 100 ml mixture of 90:10:5 methanol:water:concentrated hydrochloric acid was added to the residue and the mixture was refluxed for 10 minutes. The product was extracted with ether (200 ml) and was washed consecutively with water (50 ml), 10 % sodium hydroxide (20 ml) and again with water (volumes of 20 ml) until neutral. The solvent was removed under reduced pressure and the product (8.8 grams) was crystallized from hexane to give 7.4 grams of pure 1-hexadecyl-glycerol.

1-Hexadecyloxy-glycerol (7.9 grams), triphenylchloromethane (8.4 grams) and dry pyridine (40 ml) were heated at 100 °C for 12 hours. After cooling, 300 ml of ether and 150 ml of ice-cold water were added, and the reaction mixture was transferred to a separatory funnel. The organic phase was washed consecutively with 50 ml of ice water, 1% potassium carbonate solution (until basic) and 50 ml of water, then dried over anhydrous sodium sulfate. The solvent was evaporated, the residue was dissolved in 150 ml of warm petroleum ether and the resulting solution was cooled at 4°C overnight. After filtration of the precipitate, the filtrate was evaporated and the residue was recrystallized from 20 ml of ethyl acetate at -30 °C, yielding 8.2 grams of 1-Hexadecyl-3-tritylglycerol, melting point 49 °C.

As depicted in Scheme I, 1-hexadecyl-3-tritylglycerol (14.78 grams, 0.0265 mole), 6-bromo-1-hexene (4.85 grams) and powdered potassium hydroxide (approximately 10 grams) in hexane (200 ml) were stirred and refluxed for 6 hours, while removing the water formed by azeotropic distillation. The reaction mixture was cooled to room temperature, washed with water (3 x 100 ml), and the solvent removed under reduced pressure. The residue was dissolved in chloroform (50 ml) and purified by filtration over silica gel 60 (12.5 grams). The chloroform was removed under reduced pressure and the residue dissolved in petroleum ether (100 ml). The solution was kept at 4 °C for overnight, during which precipitation of byproducts occurred. Filtration and removal of the solvent under reduced pressure gave 12.15 grams (0.0190 mole) of 1-Hexadecyl-2-(5'-hexenyl)-3-tritylglycerol (72 % yield).

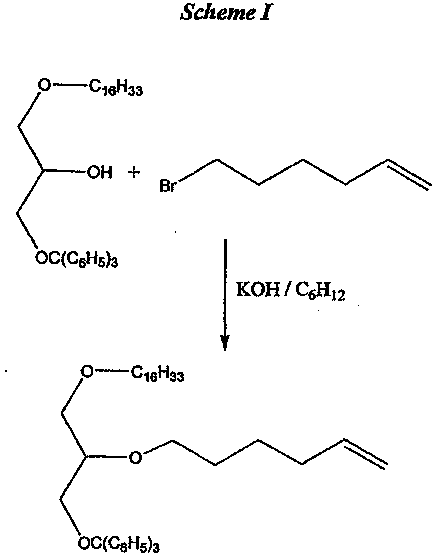

1-Hexadecyl-2-(5'-hexenyl)-3-tritylglycerol (19.80 g) was dissolved in formic acid (100 ml). The yellow solution was stirred at room temperature for 2 hours and was then cooled in ice bath. Hydrogen peroxide 33 % (25 ml) was added dropwise to ice-cooled solution during 50 minutes. The color of the reaction mixture almost immediately changed from yellow to white. After the addition was completed stirring in ice-bath was continued for additional 4 hours. The reaction mixture was thereafter poured on ice (150 grams) and extracted with ether (3 x 100 ml). The orange etheral solution was washed with water (100 ml) and the solvent was removed under reduced pressure. The residue was dissolved in dichloromethane (150 ml), washed with saturated aqueous solution of sodium bicarbonate (100 ml) and the solvent was removed under reduced pressure. The residue was then dissolved in hot hexane (250 ml). Precipitation of white compound was obtained immediately. The solution was maintained at 4 °C overnight. Filtration of the precipitate (0.53 grams), followed by removal of the solvent under reduced pressure gave 20.03 grams of yellow oily residue. This residue was dissolved in iso-propanol (200 ml) and aqueous solution of sodium hydroxide (17 grams in 50 ml of water) was added. The resulting solution was heated to 90 °C for 2 hours and was then cooled and poured on ice (150 grams). Then the mixture was extracted with dichloromethane (3 x 100 ml), the organic phase was washed with water (100 ml) and saturated aqueous solution of sodium dihydrogen phosphate and was dried over anhydrous Na₂SO₄. After removal of the solvent under reduced pressure 10.77 grams of crude product were obtained. The crude product was then dissolved in 80 % methanol (100 ml) and the solution was kept at 4 °C overnight. Filtration of the precipitate and removal of most of the solvent under reduced pressure. Extraction with dichloromethane (3 x 100 ml), drying over anhydrous Na₂SO₄ and removing of the solvent under reduced pressure Recrystallization from hexane (250 ml) gave 7.44 grams of pure 1-Hexadecyl-2-(5',6'dihydroxy-hexanyl)-glycerol.

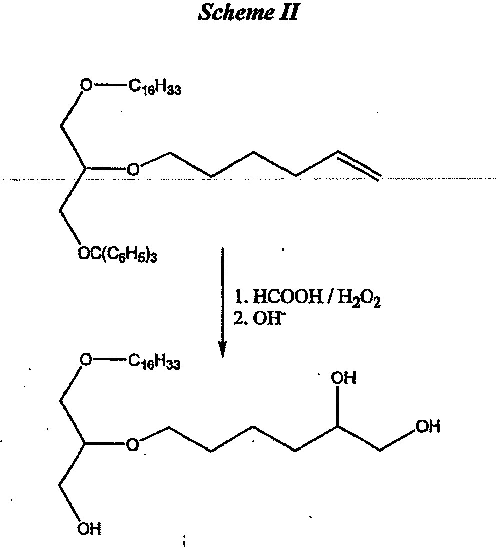

As depicted in Scheme III, 1-Hexadecyl-2-(5', 6'-dihydroxy-hexanyl)-glycerol (7.84 grams) was dissolved in isopropanol (50 ml) and water (12 ml). NaIO₄ (9 grams) was added and the reaction mixture was stirred, at room temperature for 3 hours. Water (50 ml) was added and the reaction mixture extracted with chloroform (3 x 50 ml), dried over anhydrous Na₂SO₄ filtered and the solvent removed under reduced pressure yielding 5.56 grams. The crude product was dissolved in ethanol (60 ml) and glacial acetic acid (2.3 grams). Girard's reagent T (5.6 grams) was added and the reaction mixture was refluxed for 2 hours. The reaction mixture was cooled in ice-bath, alkaline solution (2.3 grams in 45 ml water) was added and the mixture was extracted with ether (3 x 25 ml). The etheral phase was washed with water and the water combined with the alkaline phase. The aqueous phase was acidified with concentrated HCl (4.4 ml) and extracted with ether (3 x 25 ml). Washing with water, saturated aqueous sodium bicarbonate (3 x 25 ml), water (2 x 25 ml), drying over anhydrous Na₂SO₄ and removal of the solvent under reduced pressure gave 1.95 grams (0.0049 mol) of 1-Hexadecyl-2-(5'-oxo-pentanyl)-glycerol (26.9 % yield).

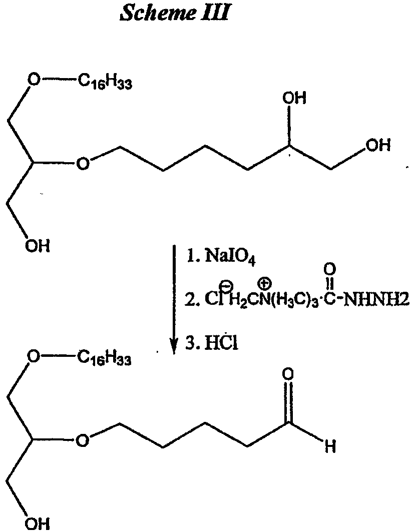

As depicted in Scheme IV, 1-Hexadecyl-2-(5'-oxopentyl)-glycerol (4.80 grams) was dissolved in dry triethylamine (57 ml). Acetic anhydride (20 ml) was added and the reaction mixture was stirred at room temperature for 2.5 hours. The reaction mixture was poured on ice (100 grams) and extracted with dichloromethane (3 x 100 ml). The organic phase was washed consecutively with water (100 ml), diluted hydrochloric acid (100 ml), water (100 ml), saturated aqueous sodium bicarbonate (100 ml) and again with water (100 ml) and was then dried over anhydrous sodium sulfate. The solvent removed under reduced pressure to give 4.54 grams of 1-Hexadecyl-2-(5'-oxopentyl)-3-acetate glycerol (yield 86 %).

1-Hexadecyl-2-(5'-oxopentyl)-3-acetate glycerol (3.94 grams) was dissolved in t-butanol (75 ml). Sodium chlorite (6.85 grams) and sodium dihydrogen phosphate dihydrate (15.50 grams) were dissolved in water (75 ml). The aqueous solution was added to the alcoholic solution and the reaction mixture was e at room temperature for 4 hours. The reaction mixture was then transferred to separatory funnel and extracted with dichloromethane (3 x 100 ml). The combined organic phase was washed with water (2 x 100 ml) and the solvent was removed under reduced pressure. The residue was dissolved in a mixture of methanol (80 ml) and 10 % aqueous NaOH (20 ml) and the solution was stirred at room temperature overnight. The methanolic solution was extracted with a mixture of toluene and hexane (1:1) (2 x 50' ml), cooled in ice-bath and HCl conc. was added slowly to reach pH 5-6. The solution was then extracted with dichloromethane (2 x 100 ml). The combined organic phase was washed with water (100 ml), dried over anhydrous Na₂SO₄ and the solvent was removed under reduced pressure to give 2.07 grams of a crude product. Recrystallization from hexane (20 ml) gave 1.30 grams of pure 1-Hexadecyl-2-(4'-carboxy)butyl-glycerol (yield 35 %).

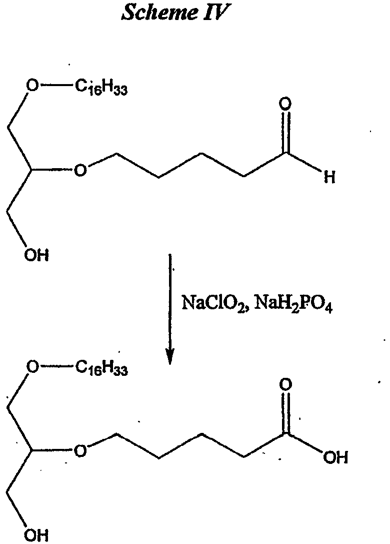

As depicted in Scheme V, to the residue methanol (100 ml) and 10 % aqueous NaOH (20 ml) were added and the resulting solution stirred at room temperature for 2 hours. The solution was extracted with mixture of petroleum ether/toluene (1:1, v/v) and the methanolic phase acidified to pH=0 with concentrated HCl and then extracted with chloroform (3 x5 0 ml). The combined chloroform phase was washed with water (2 x 0 ml), dried over anhydrous Na₂SO₄ and the solvent removed under reduced pressure yielding 0.77 gram (0.00179 mol) of rac-1-Hexadecyl-2-(5'-pentanoic methyl ester)-glycerol (96.7 % yield).

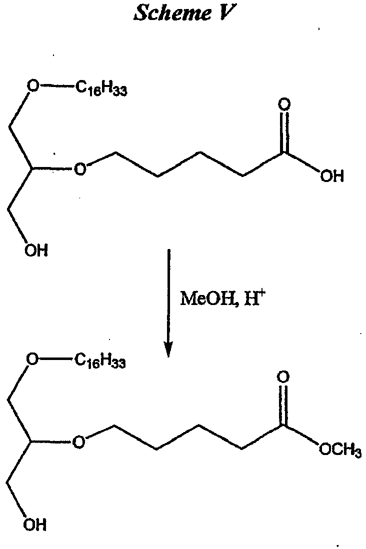

### EXAMPLE 2

### Preparation of rac 1-hexadecyl 2-(5'-pentanoic methyl ester)-glycerol using periodate and an acetate protecting group

In this example, an unsaturated moiety is introduced into a glycerolic backbone and is thereafter oxidized to an ester via an epoxide by means of acetic anhydride, 4-chlorobenzoperoxoic acid, HClO₄ periodate and methanol. Efficient isolation of the intermediates is performed by carrying out the reactions while using an acetate protecting group

As a representative example, the preparation of rac-1-hexadecyl-2-(5'-pentanoic methyl ester)-glycerol is hereby described.

rac-1-Hexadecyl-2-(5'-pentanoic methyl ester)-glycerol is prepared in accordance with the teachings of the present invention, as is described in Schemes VI through X below.

As depicted in Scheme VI below, 1-Hexadecyl-2-(5'-hexenyl)-3-tritylglycerol, prepared as described in Example 1 above (4.90 grams) was dissolved in a mixture of methanol (30 ml) and concentrated hydrochloric acid (3 ml) and the resulting solution was heated to reflux for 4 hours. The reaction mixture was cooled to room. temperature, poured on ice (100 grams) and extracted with chloroform (3 x 100 ml). The organic phase was washed with water (100 ml), aqueous sodium bicarbonate (100 ml) and again with water (100 ml). Thereafter the organic phase was dried over anhydrous Na₂SO₄ filtered and the solvent was removed to afford 3.75 grams of a residue. The residue was dissolved in n-hexane and kept at 4 °C overnight. Filtration of the precipitate and removal of the solvent gave 3.17 grams, which were dissolved' in chloroform (200 ml) and added to silica gel (45 grams). This solution was filtered and the silica gel extracted again with mixture of chloroform:methanol (200 ml, 9:1) and chloroform:methanol (200 ml, 1:1). The two last extracts were combined and the solvent removed under reduced pressure to afford 2.56 grams of 1-Hexadecyl-2-(5'-hexenyl)-glycerol (84 % yield).

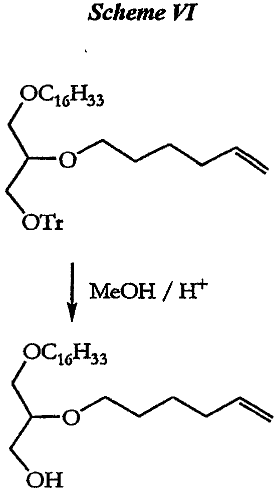

As depicted in Scheme VII below, dry pyridine (5 ml) and acetic anhydride (3 ml) were added to the resulting 1-Hexadecyl-2-(5'-hexenyl)-glycerol and the reaction mixture heated at 70°C for 2 hours. The reaction mixture was poured on ice (25 gram) and extracted with hexane (3 x 25 ml). The extract was washed successively with water (25 ml), aqueous diluted sulfuric acid (25 ml), water (25 ml), aqueous sodium bicarbonate (25 ml) and water. After drying over anhydrous Na₂SO₄, filtration and removal of the solvent 2.60 grams were obtained. The residue was dissolved in dichloromethane (50 ml) and 3-chloroperbenzoic acid (3.84 grams) added, and the reaction mixture was stirred at room temperature for over night. The solvent was reduced to about 20 ml under reduced pressure and n-hexane (100 ml) was added. After filtration the solvent was evaporated to dryness. The residue was dissolved in n-hexane (100 ml), alkaline solution (0.4 grams NaOH in 50 ml of water) was added and the phases were separated. Washing of the organic phase successively with water (25 ml), aqueous sodium bicarbonate (25 ml), water (25 ml), drying over anhydrous Na₂SO₄, filtration and removal of the solvent afforded 2.40 grams of 1-Hexadecyl-2-(5',6'-epoxyhexanyl)-3-acetate glycerol (82 % yield).

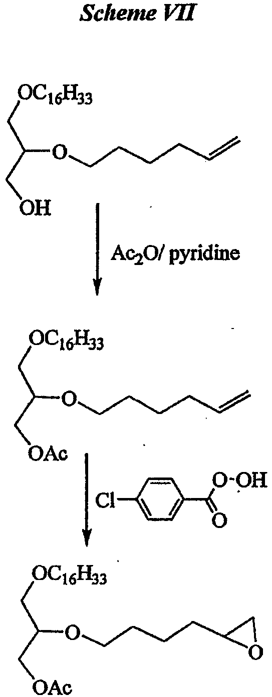

As depicted in Scheme VIII below, 1-Hexadecyl-2-(5',6'-epoxyhexanyl)-3-acetate glycerol was dissolved in acetone (50 ml). 7 % HClO₄ (5 ml) was added and the reaction mixture stirred at room temperature for 40 hours. Water (50 ml) was added and the reaction mixture extracted with chloroform (3 x 50 ml). Washing of the organic phase successively with water (25 ml), aqueous sodium bicarbonate (25 ml), water (25 ml), drying over anhydrous Na₂SO₄, filtration and removal of the solvent gave 2.29 grams of oily residue. The residue was dissolved in chloroform (200 ml) and added to silica gel (30 grams). This solution was filtered and the silica gel extracted again with mixture of chloroform:methanol (200 ml, 8:2). In the second extract after solvent removed under reduced pressure 1.45 grams of 1-hexadecyl (5',6'-dihydroxyhexanyl)- 3-acetate glycerol were obtained.

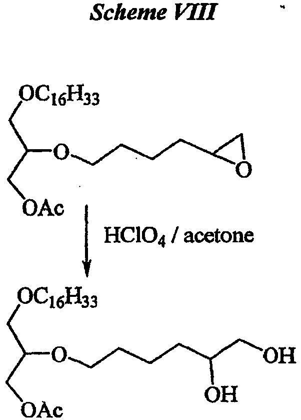

As depicted in Scheme IX below, 1-Hexadecyl-2-(5',6'-dihydroxyhexanyl)-3-acetate glycerol was dissolved in isopropanol (50 ml). Aqueous solution of sodium periodate (1.45 grams in 50 ml of water) was added and the reaction mixture stirred at room temperature for 2 hours. The reaction mixture was extracted with chloroform (3 x 50 ml), dried over anhydrous Na₂SO₄, filtered and the solvent removed under reduced pressure yielding 0.96 gram. The residue was dissolved in t-butanol (50 ml) and aqueous solution (50 ml) of sodium chlorite (1.66 grams) and sodium dihydrogen phosphate dihydrate (3.76 grams) was added. The reaction mixture was stirred at room temperature for 4 hours, extracted with chloroform (2 x 50 ml) and the solvent removed under reduced pressure. The residue was dissolved in mixture of chloroform:hexane (200 ml, 1:1) and added to silica gel (15 grams). The solution was filtered and the silica gel extracted again with chloroform (200 ml) and chloroform:methanol (200 ml, 9:1). The solvent from the last extract was removed under reduced pressure to give 0.92 grams of 1-Hexadecyl-2-(4-carboxybutyl)-3-acetate glycerol.

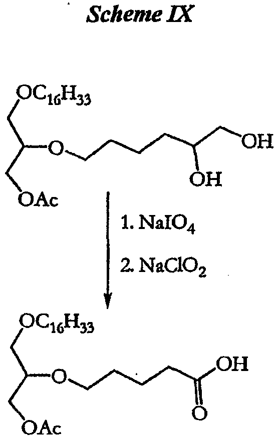

As depicted in Scheme X below, 1-Hexadecyl-2-(4'-carboxybutyl)-3-acetate glycerol dissolved in 50 ml of an 8:2 mixture of methanol and 10 % aqueous NaOH and the reaction mixture is stirred vigorously at room temperature overnight. The reaction mixture is extracted with mixture of toluene:petroleum ether (2 x 25 ml, 1:1). The methanolic phase is acidified with concentrated HCl until reaching pH of about 0, and then extracted with chloroform (2 x 25 ml). The solvent was removed under reduced pressure and the residue was dissolved in methanol (10 ml). Concentrated HCl (2 drops) is added and the solution is stirred at room temperature over night followed by extraction with chloroform (2 x 25 ml), successive washing of the organic phase with water (25 ml), followed by washing with aqueous sodium bicarbonate (25 ml), water (25 ml), followed by drying over anhydrous Na₂SO₄, filtration and removal of the solvent to afford 0.86 grams of pure rac-1-Hexadecyl-2-(5'-pentanoic methyl ester)-glycerol.

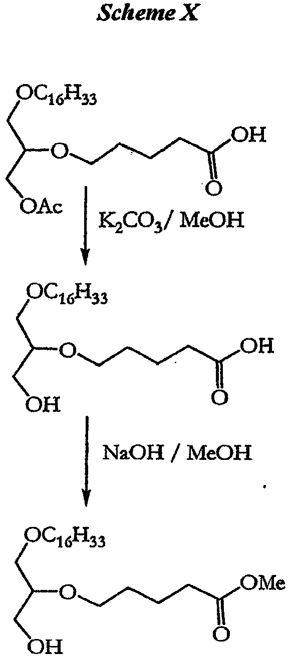

### EXAMPLE 3 (Reference Example)

### Preparation of rac-1-hexadecyl-2-(5'-pentanoic ethyl ester)-glycerol direct introduction of an oxidized moiety

rac-1-Hexadecyl-2-(5'-pentanoic ethyl ester)-glycerol is prepared in accordance with the teachings of the present invention, as is described in Scheme XI below.

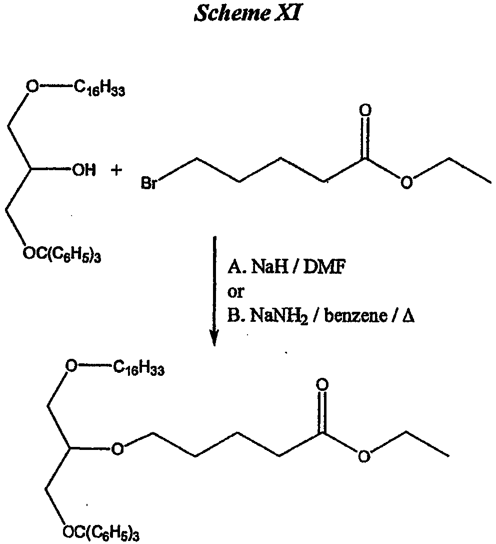

1-Hexadecyl-3-tritylglycerol is prepared as described, for example, in Example 1 above or as described in U.S. Patent No. 6,838,425.

To a three-necked flask equipped with a magnetic stirrer, 1.0 gram (1.8 mmole) 1-hexadecyl-3-tritylglycerol, 0.78 gram (3.6 mmole) 5-bromovaleric acid ethyl ester and 75 ml dimethylformamide (DMF) are added. To the stirred solution, 0.20 gram (5 mmole) NaH (60 % dispersion in mineral oil) dissolved in 25 ml dimethylformamide are added dropwise over 15 minutes and stirring is continued for an additional 1 hour until the reaction is completed. Water was added (50 ml) and the mixture extracted with ether (3 x 50 ml). The organic phase was dried over anhydrous Na₂SO₄ and the solvent removed under reduced pressure. The crude product was purified over column chromatography on silica gel.

Deprotection of the trityl group as described hereinabove gave the final product.

### EXAMPLE 4 (Reference Example)

### Introduction of a phosphorous-containing moiety to glycerolipid compound

According to the teachings of the present invention, a reactive phosphorous-containing moiety is introduced into a glycerolipid compound having one or two oxidized (or pre-oxidized) moiety-containing residues attached thereto via an ether bond. The introduction of the reactive phosphorous-containing moiety is performed using a phosphorous-containing compound such as, for example, phosphorous oxychloride). Optionally, subsequent to the introduction of the reactive phosphorous-containing moiety, the reactive phosphorous-containing moiety is converted to a phosphate moiety.

### Preparation of rac-1-hexadecyl-2-(5'-hexenyl)-3-dichlorophosphate:

As a representative example, rac-1-Hexadecyl-2-(5'-hexenyl)-3-dichlorophosphate was prepared in accordance with the teachings of the present invention, as is described in scheme XII below.

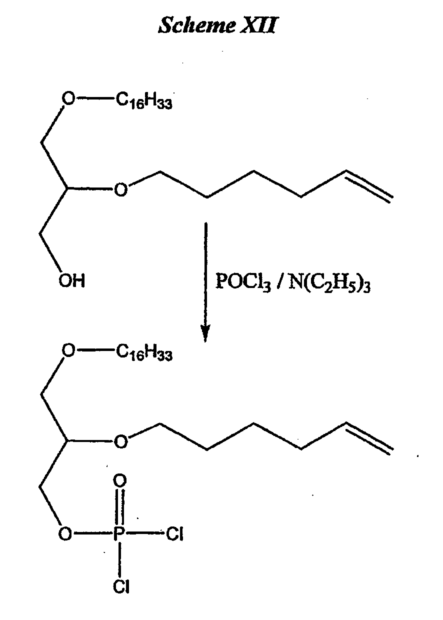

Thus, 0.24 ml (0.39 gram, 2.53 mmole) POCl₃ and 10 ml tetrahydrofuran (THF) are placed in an ice-cooled three-necked flask equipped with a magnetic stirrer. To the stirred solution was added dropwise, over 25 minutes, a mixture of 0.87 gram (2.2 mmole) rac-1-Hexadecyl-2-(5'-hexenyl)-glycerol, 0.34 ml (0.25 gram, 2.44 mmole) triethylamine and 50 ml tetrahydrofuran (THF) and stirring is continued for an additional 10 minutes in an ice-bath and further continued for 45 minutes at 23 °C.

The rac-1-Hexadecyl-2-(5'-hexenyl)-3-dichlorophosphate can be hydrolyzed, to thereby produce the corresponding phosphatidic acid, as follows:
One gram of ice is added to the reaction mixture and stirring is continued for 30 minutes. Water (50 ml) is then added and the product is extracted with mixture of chloroform:MeOH (2:1, v/v, 3 x 25 ml). The organic phase is washed with water and the solvent removed under reduced pressure.

Alternatively, the rac-1-Hexadecyl-2-(5'-hexenyl)-3-dichlorophosphate can be reacted with various alkylamine derivatives, to thereby produce a phosphoglyceride, as is exemplified below.

### Preparation of rac-1-hexadecyl-2-(5'-hexenyl)-3-phosphoethanolamine from rac-1-Hexadecyl-2-(5'-hexenyl)-3-dichlorophosphate:

rac-1-hexadecyl-2-(5'-hexenyl)-3-phosphoethanolamine was prepared in accordance with the teachings of the present invention, as is described in scheme XIII.

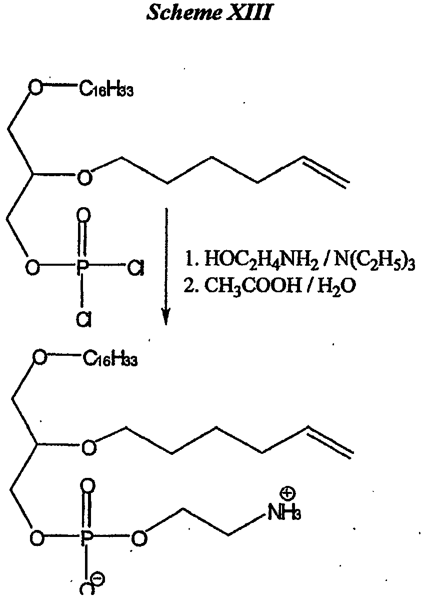

A solution of rac-1-hexadecyl-2-(5'-hexenyl)-3-dichlorophosphate in THF prepared as described immediately hereinabove in Example 2 was cooled in an ice bath. To the solution was added dropwise over a period of 10 minutes a mixture of 0.16 ml (0.16 gram, 2.7 mmole) ethanolamine, 0.34 ml (0.25 gram, 2.4 mmole) triethylamine and 50 ml THF. After all the solution was added, the resulting solution was stirred for an additional 20 minutes and then removed from the ice bath and stirred overnight at room temperature.

The solution was filtered using filter paper (Whatman #2). The residue remaining on the filter paper was dried under reduced pressure to yield 1.2 gram of an off-white residue.

The 1.2 gram off-white residue was dissolved in a mixture of 24 ml glacial acetic acid and 10 ml water, maintained at 70 °C for 1 hour and allowed to cool to room temperature. The product was extracted from the acetic acid solution by twice washing with 50 ml of a 2:1 chloroform:methanol extraction solution. The solvents of the extraction solution were evaporated leaving 0.94 gram (1.7 mmol) rac-1-hexadecyl-2-(5'-hexenyl)-3-phosphoethanolamine, a yield of 85 % relative to the rac-1-Hexadecyl-2-(5'-hexenyl)-glycerol.

### Preparation of rac-1-hexadecyl-2-(5'-hexenyl)-3-phosphocholine from rac-1-hexadecyl 2-(5'-hexenyl)-3-phosphoethanolamine:

rac-1-hexadecyl-2-(5'-hexenyl)-3-phosphocholine was prepared in accordance with the teachings of the present invention, as is described in scheme XIV below.

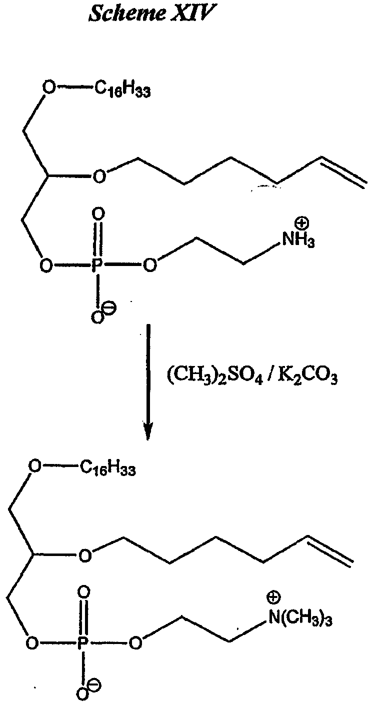

To a three-necked flask equipped with a magnetic stirrer 0.50 gram (0.99 mmole) rac-1-hexadecyl-2-(5'-hexenyl)-3-phosphoethanolamine, 50 ml isopropanol and 18 ml CH₂Cl₂ are added. While stirring, a mixture of 5 gram K₂CO₃ and 10 ml water was added and the temperature of the solution was maintained at between about 35 °C and about 40 °C while a mixture of 1.0 ml (1.3 gram, 11 mmole) dimethylsulfate and 10 ml isopropanol was added dropwise over a period of 45 minutes. After all the solution was added, the solution was stirred for an additional 90 minutes. The solution was allowed to cool to room temperature. The resulting product was extracted from the solution by thrice washing with 50 ml of a 2:1 chloroform:methanol solution. The solvents of the solution were evaporated leaving 0.50 gram (0.82 mmole) rac-1-hexadecyl-2-(5'-hexenyl)-3-phosphocholine, a yield of 92 % yield relative to rac-1-hexadecyl-2-(5'-hexenyl)-3-phosphoethanolamine.

Purity was confirmed with thin-layer chromatography on alumina using an elution solvent of chloroform:methanol:water (70:26:4). The identity of the rac-1-hexadecyl-2-(5'-hexenyl)-3-phosphocholine was confirmed using ¹³C-NMR.

### EXAMPLE 5

### Preparation of 1-Hexadecyl-2-(4'-carboxymethyl)butyl-glycero-3-phosphocholine:

A solution of 1-Hexadecyl-2-(4'-carboxymethyl)butyl-glycerol (0.86 grams), 0.34 gram (2.6 mmole) triethylamine and 50 ml tetrahydrofuran was added dropwise, over 25 minutes to an ice-cooled solution of 0.24 ml (0.39 gram, 2.6 mmole) POCl₃ and 10 ml tetrahydrofuran (THF). The resulting mixture was stirred for additional 10 minutes in an ice-bath and for 45 minutes at room temperature (23 °C). The reaction mixture was then cooled in an ice-bath and a solution of ethanolamine (0.16 ml) and triethylamine (0.64 ml) in THF (50 ml) was added dropwise thereto under vigorous stirring. The stirring was continued for additional 10 minutes in an ice-bath and further continued at room temperature for overnight. The reaction mixture was then filtered and the solvent removed under reduced pressure. The residue was dissolved in a mixture of acetic acid (24 ml) and water (10 ml) and the solution was heated to 70 °C for 1 hour. After cooling to room temperature, the mixture was extracted with chloroform (2 x 25ml) and the solvent was removed under reduced pressure. The residue was dissolved in a mixture of iso-propanol (50 ml) and dichloromethane (18 ml). Potassium carbonate (5.0 gram) in water (10 ml) was added thereto and the resulting mixture was warmed to 35-40 °C. A solution of dimethylsulfate (1 ml) in 10 ml iso-propanol was then added dropwise over 45 minutes. After additional 90 minutes the mixture was extracted with chloroform (3 x 50 ml) and the solvent was removed under reduced pressure to give 1.10 grams of 1-Hexadecyl-2-(4'-carboxymethyl)butyl-glycero-3-phosphocholine (92 % yield).

### Preparation of 1-Hexadecyl-2-(4'-carboxy)butyl-glycero-3-phosphocholine:

1-Hexadecyl-2-(4'-carboxymethyl)butyl-glycero-3-phosphocholine was dissolved in methanol (25 ml). Sodium hydroxide (1.0 gram) dissolved in 90 % methanol (20 ml) was added to the methanolic solution and the reaction mixture was stirred at room temperature for 5 hours. The pH of the reaction was adjusted to 4 by adding sodium dihydrogen phosphate. Water (50 ml) and chloroform (50 ml) were added, the organic phase was collected and the solvent was removed under reduced pressure. The residue was dissolved in chloroform, dried over anhydrous Na₂SO₄, filtered and the solvent was removed under reduced pressure. 1-Hexadecyl-2-(4'-carboxy)butyl-glycero-3-phosphocholine (0.71 grams) were obtained (66 % yield).

Citation or identification of any reference in this application shall not be construed as an admission that such reference is available as prior art to the present invention.

## Claims

1. A method of preparing a compound of the general formula II below having a glycerolic backbone and at least one residue containing an oxidized moiety attached to the sn-2 position of the glycerolic backbone via an ether bond, and further having a phosphorus-containing moiety attached to the sn-3 position of the glycerolic backbone, 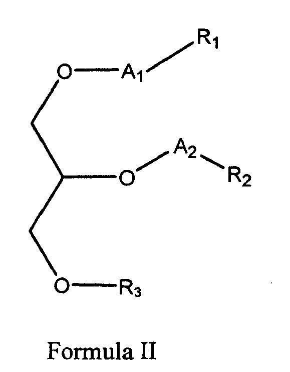 wherein:
A₁ is selected from the group consisting of CH₂, CH=CH and C=O;
A₂ is CH₂;
R₁ is an alkyl having 1-30 carbon atoms;
R₂ is 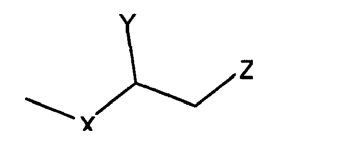
whereas:
X is an alkyl chain having 1-24 carbon atoms;
Y is selected from the group consisting of hydrogen, hydroxy, alkyl, alkoxy, halide, acetoxy and an aromatic functional group; and
Z is selected from the group consisting of: 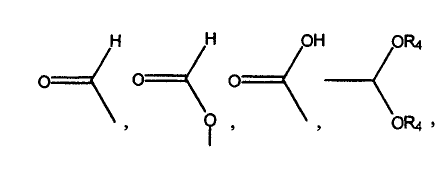
-OH,
with R₄ being an alkyl or aryl; and
R₃ is selected from the group consisting of phosphoric acid, phosphoryl choline, phosphoryl ethanolamine, phosphoryl serine, phosphatidyl choline, phosphatidyl ethanolamine, phosphatidyl serine, phosphatidyl cardiolipin, phosphatidyl inositol, phosphoryl cardiolipin, phosphoryl inositol, ethylphosphocholine, phosphorylmethanol, phosphorylethanol, phosphorylpropanol, phosphorylbutanol, phosphorylethanolamine-N-lactose, phosphoethanolamine-N-[methoxy(propylene glycol)], phosphoinositol-4-phosphate, phosphoinositol-4,5-biphosphonate, pyrophosphate, phosphoethanolamine-diethylenetriaminepentaacetate, dinitrophenyl-phosphoethanolamine, phosphoglycerol,
the method comprising:
providing a first compound having a glycerolic backbone and a free hydroxyl group at position sn-2, said first compound having general Formula I: 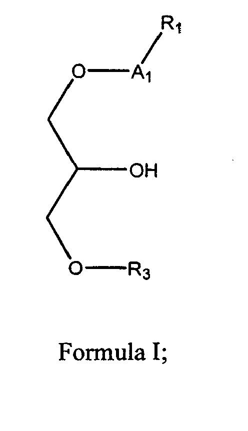 wherein
A₁ is selected from the group consisting of CH₂, CH=CH and C=O;
R₁ is selected from the group consisting of H and a hydrocarbon chain having from 1 to 30 carbon atoms, and
R₃ is hydrogen;
providing a second compound having at least one unsaturated bond and at least one reactive group capable of forming an ether bond with said free hydroxyl group;
reacting said first compound and said second compound to thereby obtain a third compound, said third compound having said glycerolic backbone and a residue comprising an unsaturated bond, said residue being attached to said glycerolic backbone via an ether bond at position sn-2;
isolating said third compound to thereby obtain a purified third compound,
wherein isolating said third compound comprises:
collecting said third compound;
providing a solution of said third compound in a solvent, said solvent being selected from petrol ether, hexane, heptane, benzene and toluene, to thereby provide a mixture including said solution of said third compound in said solvent and insoluble impurities;
removing said insoluble impurities; and
removing said solvent, thereby obtaining said purified third compound;
reacting said purified third compound with an oxidizing agent to oxidize said unsaturated bond, to thereby obtain a fourth compound having said glycerolic backbone and an oxidized moiety-containing residue attached to said glycerolic backbone via an ether bond at position *sn*-2,
isolating and purifying said fourth compound to thereby obtain a purified fourth compound,
wherein the method further comprises, subsequent to purifying said fourth compound:
reacting said purified fourth compound with a phosphorus-containing moiety, to thereby obtain said compound having a glycerolic backbone and at least one oxidized moiety-containing residue attached to the glycerolic backbone and further having a phosphorus-containing moiety attached to the glycerolic backbone,
the method being devoid of column chromatography.

2. The method of claim 1, wherein said oxidizing agent is selected from the group consisting of formic acid, hydrogen peroxide, a periodate, a perchlorate, a bismuthate, a permanganate, a chlorite, ozone, silver oxide, osmium tetraoxide and any combination thereof.

3. The method of claim 1, wherein said oxidized moiety is a carboxylic acid group.

4. The method of claim 1, wherein said oxidized moiety is a carboxylic acid group and reacting said purified third compound with said oxidizing agent comprises:
converting said purified third compound to a compound having a glycerolic backbone and an aldehyde-containing residue attached to said glycerolic backbone via an ether bond; and
oxidizing said compound having a glycerolic backbone and an aldehyde-containing residue attached to said glycerolic backbone, to thereby obtain a compound having a glycerolic backbone and a carboxylic acid-containing residue attached to said glycerolic backbone via an ether bond.

5. The method of claim 1, wherein said oxidized moiety is a carboxylic acid group and reacting said purified third compound with said oxidizing agent comprises:
converting said purified third compound to a compound having a glycerolic backbone and an epoxide-containing residue attached to said glycerolic backbone via an ether bond; and
oxidizing said compound having a glycerolic backbone and an epoxide-containing residue attached to said glycerolic backbone, to thereby obtain a compound having a glycerolic backbone and a carboxylic acid-containing residue attached to said glycerolic backbone via an ether bond.

6. The method of claim 1, wherein when the first compound of Formula I has an additional free hydroxyl group at position *sn-1* or *sn-3,* the method further comprises prior to reacting the first compound and the second compound: protecting said additional free hydroxyl group with a protecting group.

7. The method of claim 6, wherein said protecting group is trityl.

8. The method of claim 4, wherein R₃ of Formula I is hydrogen, and the method further comprises, prior to said reacting said first compound and said second compound:
protecting a free hydroxyl group at position *sn-3* of said glycerolic backbone with a protecting group.

9. The method of claim 8, wherein said protecting group is trityl.

10. The method of claim 9, further comprising, prior to reacting said third compound and said oxidizing agent:
replacing said trityl with a protecting group selected from the group consisting of acetate, pivaloate and benzoate.

11. The method of claim 1, wherein said phosphorus-containing moiety is a phosphate moiety being attached to said glycerolic backbone via a phosphodiester bond.

12. The method of claim 1, wherein reacting said purified fourth compound with said phosphorus-containing moiety comprises:
providing said purified fourth compound having a free hydroxyl group at position *sn-3* of said glycerolic backbone;
reacting said purified fourth compound with a reactive phosphorus-containing compound having a second reactive group and a third reactive group, said second reactive group being capable of reacting with said free hydroxyl group, to thereby provide a compound having a reactive phosphorous-containing group attached to the glycerolic backbone; and
converting said reactive phosphorous-containing group to said phosphorous-containing moiety.

13. The method of claim 12, wherein said reactive phosphorus-containing compound is phosphorus oxychloride (POCl₃).

14. The method of claim 1, wherein when said oxidized moiety is an ester group, the method further comprises providing a carboxylic-acid containing compound, and then converting a carboxylic acid group to an ester group.

15. The method of claim 10, further comprising removing said protecting group.

16. The method of claim 1, wherein oxidizing said unsaturated bond comprises converting the unsaturated bond to an epoxide group, and converting the epoxide group to a carboxylic acid group.

17. The method of claim 16, wherein converting said epoxide to said carboxylic acid is performed by converting the epoxide to a diol, and oxidizing the diol so as to obtain said carboxylic acid group.

## Patentansprüche

1. Ein Verfahren zur Herstellung einer Verbindung der nachstehenden allgemeinen Formel II, welche ein Glyceringerüst und mindestens einen Rest, der eine oxidierte Einheit enthält, über eine Etherbindung an die sn-2-Position des Glyceringerüsts gebunden aufweist und weiter eine an die sn-3-Position des Glyceringerüsts gebundene Phosphor-haltige Einheit aufweist, 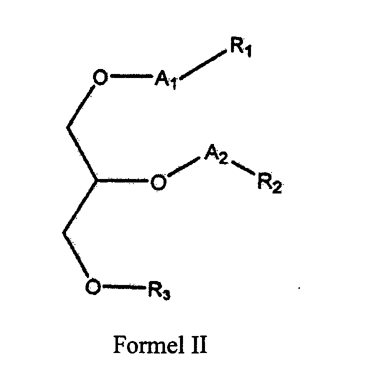 wobei:
A₁ aus der Gruppe bestehend aus CH₂, CH=CH und C=O ausgewählt ist;
A₂ gleich CH₂ ist;
R₁ ein Alkyl mit 1-30 Kohlenstoffatomen ist;
R₂ 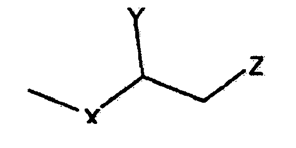
ist,
während:
X eine Alkylkette mit 1-24 Kohlenstoffatomen ist;
Y aus der Gruppe bestehend aus Wasserstoff, Hydroxy, Alkyl, Alkoxy, Halogenid, Acetoxy und einem aromatischen funktionellen Rest ausgewählt ist; und
Z aus der Gruppe bestehend aus: 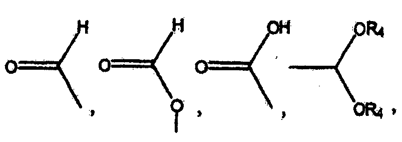
-OH.
ausgewählt ist,
wobei R₄ ein Alkyl oder Aryl ist; und
R₃ aus der Gruppe bestehend aus Phosphorsäure, Phosphorylcholin, Phosphorylethanolamin, Phosphorylserin, Phosphatidylcholin, Phosphatidylethanolamin, Phosphatidylserin, Phosphatidylcardiolipin, Phosphatidylinositol, Phosphorylcardiolipin, Phosphorylinositol, Ethylphosphocholin, Phosphorylmethanol, Phosphorylethanol, Phosphorylpropanol, Phosphorylbutanol, Phosphorylethanolamin-N-lactose, Phosphoethanolamin-N-[methoxy(propylenglykol)], Phosphoinositol-4-phosphat, Phosphoinositol-4,5-biphosphonat, Pyrophosphat, Phosphoethanolamindiethylentriamin-pentaacetat, Dinitrophenyl-phosphoethanolamin, Phosphoglycerin ausgewählt ist,
wobei das Verfahren umfasst:
Bereitstellen einer ersten Verbindung, welche ein Glyceringerüst und eine freie Hydroxylgruppe an Position sn-2 aufweist, wobei die erste Verbindung die allgemeine Formel I aufweist: 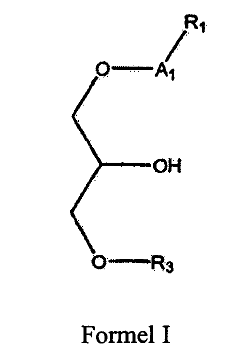 wobei
A₁ aus der Gruppe bestehend aus CH₂, CH=CH und C=O ausgewählt ist;
R₁ aus der Gruppe bestehend aus H und einer Kohlenwasserstoffkette mit 1 bis 30 Kohlenstoffatomen ausgewählt ist und
R₃ Wasserstoff ist;
Bereitstellen einer zweiten Verbindung, welche mindestens eine ungesättigte Bindung und mindestens eine reaktive Gruppe, die in der Lage ist, eine Etherbindung mit der freien Hydroxylgruppe zu bilden, aufweist;
Umsetzen der ersten Verbindung und der zweiten Verbindung, um dadurch eine dritte Verbindung zu erhalten, wobei die dritte Verbindung das Glyceringerüst und einen Rest, der eine ungesättigte Bindung umfasst, aufweist, wobei der Rest an das Glyceringerüst über eine Etherbindung an Position sn-2 gebunden ist;
Isolieren der dritten Verbindung, um dadurch eine gereinigte dritte Verbindung zu erhalten,
wobei Isolieren der dritten Verbindung umfasst:
Sammeln der dritten Verbindung;
Bereitstellen einer Lösung der dritten Verbindung in einem Lösungsmittel, wobei das Lösungsmittel aus Petrolether, Hexan, Heptan, Benzol und Toluol ausgewählt ist, um dadurch ein Gemisch bereitzustellen, das die Lösung der dritten Verbindung in dem Lösungsmittel und unlösliche Verunreinigungen enthält;
Entfernen der unlöslichen Verunreinigungen; und
Entfernen des Lösungsmittels, wodurch die gereinigte dritte Verbindung erhalten wird;
Umsetzen der gereinigten dritten Verbindung mit einem Oxidationsmittel, um die ungesättigte Bindung zu oxidieren, um dadurch eine vierte Verbindung zu erhalten, die das Glyceringerüst und einen eine oxidierte Einheit enthaltenden Rest aufweist, der an das Glyceringerüst über eine Etherbindung an Position sn-2 gebunden ist,
Isolieren und Reinigen der vierten Verbindung, um dadurch eine gereinigte vierte Verbindung zu erhalten,
wobei das Verfahren weiter, im Anschluss an das Reinigen der vierten Verbindung, umfasst:
Umsetzen der gereinigten vierten Verbindung mit einer Phosphor-haltigen Einheit, um dadurch die Verbindung zu erhalten, die ein Glyceringerüst und mindestens einen eine oxidierte Einheit enthaltenden Rest, der an das Glyceringerüst gebunden ist, aufweist und weiter eine an das Glyceringerüst gebundene Phosphor-haltige Einheit aufweist,
wobei das Verfahren frei von Säulenchromatographie ist.

2. Das Verfahren nach Anspruch 1, wobei das Oxidationsmittel aus der Gruppe bestehend aus Ameisensäure, Wasserstoffperoxid, einem Periodat, einem Perchlorat, einem Wismutat, einem Permanganat, einem Chlorit, Ozon, Silberoxid, Osmiumtetraoxid und einer Kombination davon ausgewählt ist.

3. Das Verfahren nach Anspruch 1, wobei die oxidierte Einheit eine Carbonsäuregruppe ist.

4. Das Verfahren nach Anspruch 1, wobei die oxidierte Einheit eine Carbonsäuregruppe ist und Umsetzen der gereinigten dritten Verbindung mit dem Oxidationsmittel umfasst:
Umwandeln der gereinigten dritten Verbindung in eine Verbindung, welche ein Glyceringerüst und einen über eine Etherbindung an das Glyceringerüst gebundenen Aldehyd-enthaltenden Rest aufweist; und
Oxidieren der Verbindung, welche ein Glyceringerüst und einen an das Glyceringerüst gebundenen Aldehyd-enthaltenden Rest aufweist, um dadurch eine Verbindung, welche ein Glyceringerüst und einen über eine Etherbindung an das Glyceringerüst gebundenen Carbonsäure-haltigen Rest aufweist, zu erhalten.

5. Das Verfahren nach Anspruch 1, wobei die oxidierte Einheit eine Carbonsäuregruppe ist und Umsetzen der gereinigten dritten Verbindung mit dem Oxidationsmittel umfasst:
Umwandeln der gereinigten dritten Verbindung in eine Verbindung, welche ein Glyceringerüst und einen über eine Etherbindung an das Glyceringerüst gebundenen Epoxid-enthaltenden Rest aufweist; und
Oxidieren der Verbindung, welche ein Glyceringerüst und einen an das Glyceringerüst gebundenen Epoxid-enthaltenden Rest aufweist, um dadurch eine Verbindung, welche ein Glyceringerüst und einen über eine Etherbindung an das Glyceringerüst gebundenen Carbonsäure-haltigen Rest aufweist, zu erhalten.

6. Das Verfahren nach Anspruch 1, wobei, wenn die erste Verbindung der Formel I eine zusätzliche freie Hydroxylgruppe an Position sn-1 oder sn-3 aufweist, das Verfahren weiter vor dem Umsetzen der ersten Verbindung und der zweiten Verbindung umfasst:
Schützen der zusätzlichen freien Hydroxylgruppe mit einer Schutzgruppe.

7. Das Verfahren nach Anspruch 6, wobei die Schutzgruppe Trityl ist.

8. Das Verfahren nach Anspruch 4, wobei R₃ der Formel I Wasserstoff ist und das Verfahren weiter, vor dem Umsetzen der ersten Verbindung und der zweiten Verbindung, umfasst:
Schützen einer freien Hydroxylgruppe an Position sn-3 des Glyceringerüsts mit einer Schutzgruppe.

9. Das Verfahren nach Anspruch 8, wobei die Schutzgruppe Trityl ist.

10. Das Verfahren nach Anspruch 9, weiter umfassend, vor dem Umsetzen der dritten Verbindung und des Oxidationsmittels:
Ersetzen des Trityls mit einer Schutzgruppe, ausgewählt aus der Gruppe bestehend aus Acetat, Pivaloat und Benzoat.

11. Das Verfahren nach Anspruch 1, wobei die Phosphor-haltige Einheit eine Phosphat-Einheit ist, die über eine Phosphodiester-Bindung an das Glyceringerüst gebunden ist.

12. Das Verfahren nach Anspruch 1, wobei Umsetzen der gereinigten vierten Verbindung mit der Phosphor-haltigen Einheit umfasst:
Bereitstellen der gereinigten vierten Verbindung, welche eine freie Hydroxylgruppe an Position sn-3 des Glyceringerüsts aufweist;
Umsetzen der gereinigten vierten Verbindung mit einer reaktiven Phosphor-haltigen Verbindung, welche eine zweite reaktive Gruppe und eine dritte reaktive Gruppe aufweist, wobei die zweite reaktive Gruppe in der Lage ist, mit der freien Hydroxylgruppe zu reagieren, um dadurch eine Verbindung, welche einen an das Glyceringerüst gebundenen reaktiven Phosphor-haltigen Rest aufweist, bereitzustellen; und
Umwandeln des reaktiven Phosphor-haltigen Rests in die Phosphor-haltige Einheit.

13. Das Verfahren nach Anspruch 12, wobei die reaktive Phosphor-haltige Verbindung Phosphoroxychlorid (POCl₃) ist.

14. Das Verfahren nach Anspruch 1, wobei, wenn die oxidierte Einheit eine Estergruppe ist, das Verfahren weiter Bereitstellen einer Carbonsäure-haltigen Verbindung und dann Umwandeln einer Carbonsäuregruppe in eine Estergruppe umfasst.

15. Das Verfahren nach Anspruch 10, weiter umfassend Entfernen der Schutzgruppe.

16. Das Verfahren nach Anspruch 1, wobei Oxidieren der ungesättigten Bindung Umwandeln der ungesättigten Bindung in eine Epoxidgruppe und Umwandeln der Epoxidgruppe in eine Carbonsäuregruppe umfasst.

17. Das Verfahren nach Anspruch 16, wobei Umwandeln des Epoxids in die Carbonsäure durch Umwandeln des Epoxids in ein Diol und Oxidieren des Diols, um die Carbonsäuregruppe zu erhalten, durchgeführt wird.

## Revendications

1. Procédé de préparation d'un composé répondant à la formule générale II ci-dessous ayant un squelette glycérolique et au moins un résidu contenant un fragment oxydé lié à la position sn-2 du squelette glycérolique par l'intermédiaire d'une liaison éther, et ayant en outre un fragment contenant du phosphore lié à la position sn-3 du squelette glycérolique, 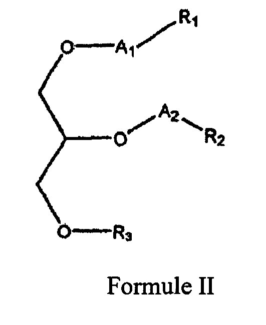 dans laquelle :
A₁ est choisi dans le groupe constitué par CH₂, CH=CH et C=O ;
A₂ est CH₂ ;
R₁ est un alkyle ayant de 1 à 30 atomes de carbone ;
R₂ est 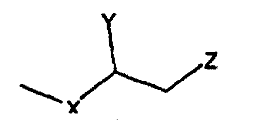
où :
X est une chaine alkyle ayant de 1 à 24 atomes de carbone ;
Y est choisi dans le groupe constitué par un atome d'hydrogène, un groupe hydroxy, alkyle, alcoxy, halogénure, acétoxy et un groupe fonctionnel aromatique ; et
Z est choisi dans le groupe constitué par : 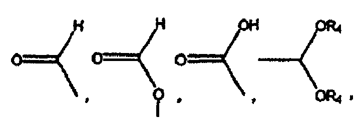
-OH.
R₄ étant un alkyle ou aryle, et
R₃ est choisi dans le groupe constitué par l'acide phosphorique, la phosphoryl-choline, la phosphoryléthanolamine, la phosphorylsérine, la phosphatidylcholine, la phosphatidyléthanolamine, la phosphatidylsérine, la phosphatidylcardiolipine, le phosphatidylinositol, la phosphorylcardiolipine, le phosphorylinositol, l'éthyl-phosphocholine, le phosphorylméthanol, le phosphoryléthanol, le phosphorylpropanol, le phosphorylbutanol, le phosphoryléthanolamine-N-lactose, le phosphoéthanolamine-N-[méthoxy(propylène glycol)], le phosphoinositol-4-phosphate, le phosphoinositol-4,5-biphosphonate, le pyrophosphate, le pentaacétate de phosphoéthanolamine-diéthylène-triamine, la dinitrophényl-phosphoéthanolamine, le phosphoglycérol,
le procédé comprenant :
l'utilisation d'un premier composé ayant un squelette glycérolique et un groupe hydroxyle libre en position *sn*-2, ledit premier composé répondant à la Formule générale I: 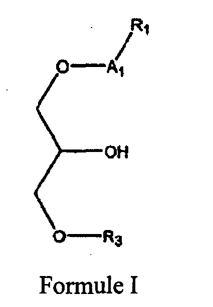 dans laquelle :
A₁ est choisi dans le groupe constitué par CH₂, CH=CH et C=O ;
R₁ est choisi dans le groupe constitué par H et une chaîne hydrocarbure ayant de 1 à 30 atomes de carbone ; et
R₃ est un atome d'hydrogène ;
l'utilisation d'un deuxième composé ayant au moins une liaison insaturée et au moins un groupe réactif capable de former une liaison éther avec ledit groupe hydroxyle libre ;
la réaction dudit premier composé et dudit deuxième composé pour obtenir ainsi un troisième composé, ledit troisième composé ayant ledit squelette glycérolique et un résidu comprenant une liaison insaturée, ledit résidu étant lié audit squelette glycérolique par l'intermédiaire d'une liaison éther en position *sn*-2;
l'isolement dudit troisième composé pour obtenir ainsi un troisième composé purifié ;
dans lequel l'isolement dudit troisième composé comprend :
la collecte dudit troisième composé ;
la préparation d'une solution dudit troisième composé dans un solvant, ledit solvant étant choisi parmi l'éther de pétrole, l'hexane, l'heptane, le benzène et le toluène, pour obtenir ainsi un mélange comprenant ladite solution dudit troisième composé dans ledit solvant et des impuretés insolubles ;
l'élimination desdites impuretés insolubles ; et
l'élimination dudit solvant, pour obtenir ainsi ledit troisième composé purifié ;
la réaction dudit troisième composé purifié avec un agent oxydant pour oxyder ladite liaison insaturée, pour obtenir ainsi un quatrième composé ayant ledit squelette glycérolique et un résidu contenant un fragment oxydé lié audit squelette glycérolique par l'intermédiaire d'une liaison éther en position *sn*-2;
l'isolement et la purification dudit quatrième composé pour obtenir ainsi un quatrième composé purifié,
dans lequel le procédé comprend en outre, après la purification dudit quatrième composé :
la réaction dudit quatrième composé purifié avec un fragment contenant du phosphore, pour obtenir ainsi ledit composé ayant un squelette glycérolique et au moins un résidu contenant un fragment oxydé lié au squelette glycérolique et ayant en outre un fragment contenant du phosphore lié au squelette glycérolique,
le procédé étant dépourvu de chromatographie sur colonne.

2. Procédé selon la revendication 1, dans lequel ledit agent oxydant est choisi dans le groupe constitué par l'acide formique, le peroxyde d'hydrogène, un périodate, un perchlorate, un bismuthate, un permanganate, un chlorite, l'ozone, l'oxyde d'argent, le tétraoxyde d'osmium et une combinaison quelconque de ceux-ci.

3. Procédé selon la revendication 1, dans lequel ledit fragment oxydé est un groupe acide carboxylique.

4. Procédé selon la revendication 1, dans lequel ledit fragment oxydé est un groupe acide carboxylique et la réaction dudit troisième composé purifié avec ledit agent oxydant comprend :
la conversion dudit troisième composé purifié en un composé ayant un squelette glycérolique et un résidu contenant un aldéhyde lié audit squelette glycérolique par l'intermédiaire d'une liaison éther ; et
l'oxydation dudit composé ayant un squelette glycérolique et un résidu contenant un aldéhyde lié audit squelette glycérolique, pour obtenir ainsi un composé ayant un squelette glycérolique et un résidu contenant de l'acide carboxylique lié audit squelette glycérolique par l'intermédiaire d'une liaison éther.

5. Procédé selon la revendication 1, dans lequel ledit fragment oxydé est un groupe acide carboxylique et la réaction dudit troisième composé purifié avec ledit agent oxydant comprend :
la conversion dudit troisième composé purifié en un composé ayant un squelette glycérolique et un résidu contenant de l'époxyde lié audit squelette glycérolique par l'intermédiaire d'une liaison éther ; et
l'oxydation dudit composé ayant un squelette glycérolique et un résidu contenant de l'époxyde lié audit squelette glycérolique, pour obtenir ainsi un composé ayant un squelette glycérolique et un résidu contenant de l'acide carboxylique lié audit squelette glycérolique par l'intermédiaire d'une liaison éther.

6. Procédé selon la revendication 1 dans lequel, quand le premier composé répondant à la Formule I a un groupe hydroxyle libre supplémentaire en position *sn*-1 ou *sn-3,* le procédé comprend en outre avant la réaction du premier composé et du second composé : la protection dudit groupe hydroxyle libre supplémentaire avec un groupe de protection.

7. Procédé selon la revendication 6, dans lequel ledit groupe de protection est un trityle.

8. Procédé selon la revendication 4, dans lequel R₃ dans la Formule 1 est un atome d'hydrogène, et le procédé comprend en outre, avant ladite réaction dudit premier composé et dudit second composé :
la protection d'un groupe hydroxyle libre en position *sn-3* dudit squelette glycérolique avec un groupe de protection.

9. Procédé selon la revendication 8, dans lequel ledit groupe de protection est un trityle.

10. Procédé selon la revendication 9, comprenant en outre, avant la réaction dudit troisième composé et dudit agent oxydant :
le remplacement dudit trityle par un groupe de protection choisi dans le groupe constitué par l'acétate, le pivaloate et le benzoate.

11. Procédé selon la revendication 1, dans lequel ledit fragment contenant un phosphore est un fragment phosphate lié audit squelette glycérolique par l'intermédiaire d'une liaison phosphodiester.

12. Procédé selon la revendication 1, dans lequel la réaction dudit quatrième composé purifié avec ledit fragment contenant un phosphore comprend :
l'utilisation dudit quatrième composé purifié ayant un groupe hydroxyle libre en position *sn-3* dudit squelette glycérolique ;
la réaction dudit quatrième composé purifié avec un composé réactif contenant du phosphore ayant un deuxième groupe réactif et un troisième groupe réactif, ledit deuxième groupe réactif étant capable de réagir avec ledit groupe hydroxyle libre, pour obtenir ainsi un composé ayant un groupe réactif contenant du phosphore lié au squelette glycérolique ; et
la conversion dudit groupe réactif contenant du phosphore en ledit fragment contenant du phosphore.

13. Procédé selon la revendication 12, dans lequel ledit composé réactif contenant du phosphore est un oxychlorure de phosphore (POCl₃).

14. Procédé selon la revendication 1 dans lequel, quand ledit fragment oxydé est un groupe ester, le procédé comprend en outre l'utilisation d'un composé contenant de l'acide carboxylique, puis la conversion d'un groupe acide carboxylique en groupe ester.

15. Procédé selon la revendication 10, comprenant en outre l'élimination dudit groupe de protection.

16. Procédé selon la revendication 1, dans lequel l'oxydation de ladite liaison insaturée comprend la conversion de la liaison insaturée en un groupe époxyde, et la conversion du groupe époxyde en un groupe acide carboxylique.

17. Procédé selon la revendication 16, dans lequel la conversion dudit époxyde en ledit acide carboxylique est réalisée par conversion de l'époxyde en un diol, et oxydation du diol de manière à obtenir ledit groupe acide carboxylique.
